# FASCICULE DE BREVET EUROPEEN

(11) **EP 3 921 798 B1**
(45) Date de publication et mention de la délivrance du brevet: **01.10.2025**
(21) Numéro de dépôt: 20702158.5
(22) Date de dépôt: 04.02.2020
(51) Int. Cl.: G06T 7/11, G06T 7/187, G06T 7/12

(54) **PROCÉDÉ DE SEGMENTATION AUTOMATIQUE DE DENTS**
VERFAHREN FÜR DIE AUTOMATISCHE SEGMENTIERUNG VON ZÄHNEN
METHOD FOR AUTOMATICALLY SEGMENTING TEETH

(30) Priorité: 04.02.2019 FR 1901075
(43) Date de publication de la demande: 15.12.2021
(73) Titulaire: Borea, 87068 Limoges (FR)
(72) Inventeur: GUILLOT, Julien, 87068 Limoges (FR)
(74) Mandataire: LLR
(86) Numéro de dépôt international: PCT/EP2020/052723
(87) Numéro de publication internationale: WO 2020/161121

(56) Documents cités:
- US-A1- 2005 019 732
- CHANSOPHEA CHUON ET AL: "Surface Mesh Segmentation Using Local Geometry", COMPUTER GRAPHICS, IMAGING AND VISUALIZATION, 2009. CGIV '09. SIXTH INTERNATIONAL CONFERENCE ON, IEEE, PISCATAWAY, NJ, USA, 11 August 2009 (2009-08-11), pages 250 - 254, XP031552514, ISBN: 978-0-7695-3789-4
- KIM SUZI ET AL: "Automatic tooth segmentation of dental mesh using a transverse plane", 2018 40TH ANNUAL INTERNATIONAL CONFERENCE OF THE IEEE ENGINEERING IN MEDICINE AND BIOLOGY SOCIETY (EMBC), IEEE, 18 July 2018 (2018-07-18), pages 4122 - 4125, XP033429365, DOI: 10.1109/EMBC.2018.8513318

## Description

L'invention concerne l'imagerie médicale dans le cadre des prothèses dentaires. En particulier, elle concerne la segmentation d'un modèle numérique de dents comprenant un maillage triangulaire en trois dimensions.

Un scanner optique permet de mesurer, au sein de la bouche d'un patient, les dimensions de son arcade dentaire. Ce dispositif, associé à un logiciel de visualisation en trois dimensions, permet d'obtenir un maillage triangulaire très précis de l'arcade dentaire et de la visualiser. Cette technologie est utile au prothésiste dentaire pour la réalisation de la forme d'une prothèse de dent, et elle permet la transmission et la conservation des informations sur les dimensions de l'arcade dentaire du patient.

Cependant, ce type de scanner ne permet pas de mesurer précisément les informations de teintes et translucidité des dents du patient. C'est pourquoi la majorité des dentistes continuent à utiliser un jeu de teintes en main classique à comparer manuellement avec les dents du patient, afin de choisir les teintes de la prothèse à fabriquer qui semblent correspondre le mieux, à l'œil nu, avec les teintes des dents du patients. Or, ce type de comparaison est très approximatif et la prothèse fabriquée ne correspond pas suffisamment précisément aux couleurs des dents du patient. Cela engendre une mauvaise intégration esthétique de la prothèse en bouche.

Pour obtenir des informations de teinte et de translucidité de manière précise, d'autres technologies existent, telles que des spectrophotomètres (comme le « Rayplicker » au nom de la demanderesse) qui permettent d'identifier précisément, pour une dent donnée, les nuances de couleurs et de translucidité de la dent et de les localiser sur ladite dent dans un fichier représentant la dent en deux dimensions.

Cependant, les technologies de mesure d'arcade dentaire en trois dimensions d'un côté et les technologies de prise de teinte d'une dent en deux dimensions de l'autre ne sont pas compatibles. En d'autres termes, il n'est pas possible d'intégrer un système de spectrophotométrie au sein d'un système de prise numérique d'arcade dentaire de par la nature de ces deux techniques. En effet, le mouvement permanent du scanner optique visant à numériser en trois dimensions toute l'arcade dentaire du patient n'est pas compatible avec le besoin d'une stabilité, de l'ordre de la seconde, nécessaire pour effectuer l'analyse spectrophotométrique d'une seule dent.

Pour résoudre ce problème, il conviendrait d'associer numériquement une dent associée à des valeurs de teintes et de translucidités localisées, obtenues grâce à un spectrophotomètre, à la dent correspondante représentée dans un maillage triangulaire issu d'un scanner optique. Or, il s'agit de deux représentations numériques différentes, l'une avec une dent en deux dimensions, l'autre avec des dents non identifiées et en trois dimensions.

Ainsi, il est nécessaire, dans un premier temps, de pouvoir identifier ce qu'est une dent au sein du maillage triangulaire en trois dimensions. Puis, dans un deuxième temps, il convient de comparer la dent de référence dont les valeurs de teintes et translucidités sont connues, à chacune des dents identifiées dans le maillage, afin de trouver la dent correspondante.

On connaît déjà dans l'état la technique, notamment d'après le document « A Fast Segmentation Method for STL Teeth Model » (Zhanli Li), une méthode de segmentation d'un modèle numérique de dents comprenant un maillage triangulaire en trois dimensions, prenant en entrée un triangle de départ et utilisant un algorithme classique de *« Region* Growing » visant à identifier une zone de dent comprenant ce triangle de départ.

Cependant, la zone de dent identifiée au moyen de cet algorithme n'est pas suffisamment précise et peut s'étendre sur plusieurs dents pourtant distinctes. Il est donc difficile trouver au sein du maillage la dent correspondante à la dent de référence.

En outre, il est nécessaire de fournir des triangles de départs situés sur des dents respectives pour que le procédé présenté débute la segmentation. Ce procédé ne peut donc pas fournir une segmentation de dents automatique en partant uniquement du maillage triangulaire, sans autre information.

L'invention a notamment pour but d'améliorer la segmentation d'un modèle numérique de dents comprenant un maillage triangulaire en trois dimensions.

Un objet de l'invention est également de permettre la segmentation du modèle de manière automatique à partir du maillage.

Un autre objet de l'invention est de faciliter l'identification d'une dent au sein d'un maillage triangulaire correspondante à une dent de référence d'une représentation en deux dimensions.

A cet effet l'invention a pour objet un procédé de segmentation d'un modèle numérique de dents comprenant un maillage triangulaire en trois dimensions, caractérisé en ce que des moyens automatisés mettent en œuvre les étapes suivantes, dites étapes initiales :
- classification, au sein du maillage, d'au moins un triangle en catégorie concave et/ ou d'au moins un triangle en catégorie convexe, et
- identification, au sein du maillage, d'au moins une zone de dent comprenant des triangles tels que chaque triangle de la zone présente au moins un triangle voisin dans la zone, tous les triangles de la zone étant hors catégorie convexe ou concave.

En effet, la dent est séparée de ses dents voisines et de la gencive par des zones fortement concaves. En outre, le sommet de la dent, faisant l'intermédiaire entre la surface de la dent exposée à l'extérieur du modèle et l'intérieur de l'arcade dentaire, correspond à des zones fortement convexes. En classifiant les triangles du maillage en catégorie convexe ou en catégorie concave, on identifie ainsi les frontières de la dent. Les triangles non classifiés en catégorie concave ou convexe sont hors catégorie, ce qui signifie qu'ils ont vocation à faire partie de la zone de dent qu'on souhaite identifier.

Ainsi, l'identification de la zone de dent permet d'identifier les triangles qui forment la dent, délimitée par ses frontières formées de zones concaves ou convexes qui n'en font pas partie. On identifie donc une zone de dent qui s'étend sur une seule dent. Corollairement, on peut donc identifier, au sein du maillage, les zones de dents s'étendant sur chaque dent numérisée de l'arcade dentaire.

En outre, par la suite, grâce à ce procédé, il est plus facile de comparer la ou les dents du maillage à une dent de référence en deux dimensions. En effet, on identifie la ou chaque dent du maillage en partant d'une zone de dent qui ne correspond qu'à une seule dent et au moins en grande partie à la surface extérieure de ladite dent. Il est donc plus facile d'en identifier les contours et de les comparer à ceux de la dent de référence.

Avantageusement, pour réaliser l'étape de classification du triangle en catégorie concave ou convexe, les moyens automatisés mettent en œuvre les sous-étapes suivantes :
- pour au moins l'un des triangles du maillage, détermination de valeurs d'angles entre le triangle et chaque triangle voisin de chaque triangle voisin au triangle, et
- en fonction des valeurs d'angles déterminées, classification du triangle en catégorie concave ou en catégorie convexe.

Ainsi, c'est en fonction des « seconds voisins » du triangle considéré que les moyens classifient ce dernier, les « seconds voisins » étant les voisins des voisins du triangle. Cela permet de tenir compte d'une zone plus large que celle des voisins immédiats.

De préférence, les moyens automatisés déterminent les valeurs d'angles au moyen de la normale du triangle et des normales de chaque triangle voisin de chaque triangle voisin au triangle.

Ainsi, ces normales sont déjà connues du modèle numérique, de sorte que les angles sont rapidement déterminés.

Avantageusement, pour au moins un triangle en catégorie concave, les moyens automatisés mettent en œuvre les étapes suivantes :
- détermination du nombre de triangles voisins au triangle qui sont en catégorie concave, et
- si le nombre est inférieur à une valeur prédéterminée, retrait du triangle de la catégorie concave.

Ainsi, cette passe supplémentaire permet de diminuer le bruit qui est généralement présent dans les zones concaves, c'est-à-dire de supprimer les triangles qui ont été classés en catégorie concave alors qu'ils sont plutôt isolés et n'appartiennent pas à une zone concave du maillage.

De préférence, pour réaliser l'étape d'identification de la zone de dent, les moyens automatisés mettent en œuvre les sous-étapes suivantes :
- détermination, au sein du maillage, d'un triangle de départ hors catégorie concave ou convexe,
- sélection de triangles voisins au triangle de départ, hors catégorie concave ou convexe et dont les normales respectives présentent des valeurs comprises dans un intervalle prédéterminé, et
- en considérant chacun des triangles sélectionnés comme un triangle de départ, répétition de l'étape précédente pour chaque triangle de départ, jusqu'à l'absence de triangles hors catégorie à sélectionner, de manière à identifier la zone de dent comprenant les triangles sélectionnés.

Ainsi, on réalise un algorithme de « region growing » visant à déterminer une zone comprenant des triangles situés sur une seule dent et voisins les uns des autres. De cette façon, on distingue les triangles appartenant à différentes dents. Le fait d'avoir extrait les triangles « concaves » ou « convexes » permet de construire des zones qui s'arrêteront aux intersections entre les dents (zones concaves) ou aux intersections avec d'autres éléments (zones convexes pour les sommets, zones concaves pour les gencives) et donc d'éviter qu'une zone s'étende sur plusieurs dents distinctes.

Avantageusement, les moyens automatisés déterminent, au sein du maillage, plusieurs triangles de départ distincts et hors catégorie concave ou convexe, de manière à identifier plusieurs zones de dents distinctes.

Ainsi, on construit plusieurs zones de dent au sein du maillage.

De préférence, les moyens automatisés mettent en œuvre les étapes suivantes :
- pour la ou au moins l'une des zones de dents, détermination d'un nombre de triangles voisins situés dans une zone de dent voisine à la zone de dent,
- si le nombre de triangles voisins est supérieur à une valeur prédéterminée, fusion de la zone de dent avec la zone de dent voisine de manière à ce que les deux zones ne forment qu'une zone de dent.

Ainsi, alors qu'à l'issue de l'étape précédente, plusieurs zones pouvaient correspondre à une dent, on fusionne ici les zones de dent voisines de manière à ce que pour une seule dent corresponde une seule zone de dent.

Avantageusement, les moyens automatisés mettent en œuvre les étapes suivantes :
- pour la ou au moins l'une des zones de dents, détermination du nombre de triangles de la zone et d'une valeur de courbure moyenne de la zone,
- si le nombre de triangles est supérieur à une valeur maximale prédéterminée, inférieur à une valeur minimale prédéterminée, et/ou si la valeur de courbure moyenne est inférieure à un seuil prédéterminé, marquage de la zone de dent de manière à ne plus identifier les triangles de la zone de dent comme faisant partie d'une zone de dent.

Ainsi, alors qu'à l'issue de l'étape précédente, il pouvait rester des zones de dent correspondant à d'autres éléments du maillage, on élimine ici ces zones éventuelles de sorte que chaque zone restante correspond à une dent. Les éléments éliminés sont soit trop plans, tels que des éventuels socles dentaires numérisés, soit trop grands comme les gencives ou trop petits pour correspondre à des dents. On évite ainsi de conserver des éléments qui, une fois projetés en deux dimensions, auraient la forme d'une dent alors qu'ils ne correspondent pas, en trois dimensions, à une dent. Cela est important en vue de rechercher plus tard une dent, dont on connait la surface en deux dimensions, au sein du maillage en trois dimensions.

De préférence, préalablement aux étapes initiales, les moyens automatisés mettent en œuvre les étapes suivantes :
- pour au moins l'un des triangles du maillage, détermination de l'orientation de la normale du triangle, et
- si la normale est tournée vers l'intérieur du maillage, marquage du triangle de manière à ne pas l'identifier comme faisant partie d'une zone de dent.

Cette étape vise à marquer les triangles du maillage qui correspondraient aux zones internes de l'arcade dentaire, telle que la surface intérieure des dents. Elle peut être effectuée en amont de toutes les autres étapes. On ne s'intéresse en effet qu'à la surface extérieure des dents puisque c'est à la surface extérieure de l'une de ces dents qu'on mesure par ailleurs des valeurs de teinte et/ou de translucidité, et ce sont ces surfaces extérieures de dents qu'on souhaite comparer à la dent de référence où ces valeurs sont connues pour trouver au sein du maillage la dent correspondante.

Avantageusement, après les étapes initiales, les moyens automatisés mettent en œuvre les étapes suivantes :
- pour la ou au moins l'une des zones de dents, détermination d'un triangle de base de la zone de dent,
- à partir du triangle de base, détermination de contours d'une dent comprenant le triangle de base.

Ainsi, pour une zone de dent, on part d'un triangle de la zone et on réalise un algorithme de « region growing » pour obtenir les contours précis de la dent. Les zones de dents peuvent en effet présenter des contours non suffisamment précis si on souhaite les comparer aux contours précis d'une dent de référence représentés en deux dimensions.

De préférence, le triangle de base étant un triangle central situé au centre de la zone de dent, les moyens automatisés mettent en œuvre les étapes suivantes pour sa détermination :
- détermination des coordonnées, au sein du maillage, du centre de la zone de dent, au moyen des coordonnées du centre de chaque triangle de la zone de dent, et
- détermination du triangle central de la zone de dent en comparant les coordonnées de chaque triangle de la zone de dent avec les coordonnées du centre de la zone déterminées et en identifiant comme triangle central le plus proche du centre de la zone de dent.

Ainsi, on identifie comme triangle de base de chaque zone le triangle central de chaque zone. C'est le triangle de base le plus adapté pour obtenir ensuite les contours de la dent, car on sait grâce à la construction de la zone de dent qu'il est au cœur de la dent et donc que l'algorithme de « region growing » va être optimal.

Avantageusement, pour réaliser la détermination des contours de la dent, les moyens automatisés mettent en œuvre les étapes suivantes :
- pour chaque zone de dent, identification de chaque triangle de base de la zone de dent comme faisant partie d'une surface de dent correspondant à la zone de dent
- pour chaque zone de dent, détermination de valeurs d'angles entre chaque triangle de la zone et les voisins du triangle,
- détermination d'une valeur d'angle moyen pour chaque triangle de la zone en fonction des valeurs d'angles déterminées,
- si la valeur d'angle moyen est inférieure à une valeur prédéterminée, identification du triangle comme faisant partie de la surface de dent correspondante à la zone de dent,
- pour chaque triangle voisin au triangle de base, si le triangle voisin appartient à la zone de dent du triangle de base, identification du triangle voisin comme faisant partie de la surface de dent correspondante à la zone de dent,
- en considérant chaque triangle voisin sélectionné comme un triangle de base, répétition de l'étape précédente pour chaque triangle de base, jusqu'à l'absence de triangle de la zone à identifier comme faisant partie de la surface,
- pour chaque surface de dent, dilatation de la surface en ajoutant à la surface des triangles qui sont voisins des triangles de la surface et qui appartiennent à la même zone de dent que les triangles de la surface,
- pour chaque surface de dent, érosion de la surface en supprimant de la surface des triangles dont un voisin appartenant à la même zone de dent n'est pas identifié comme faisant partie de la surface,
- détermination des contours de la surface de la dent au moyen du calcul d'une ou plusieurs courbes de Bézier.

Il s'agit de l'algorithme de « region growing » utilisé pour obtenir les contours précis de la dent. On y utilise les zones de dents identifiées auparavant mais en affinant l'obtention des triangles situés aux frontières de la dent, au moyen des différentes étapes énoncées, de manière à obtenir les contours précis de la dent.

Avantageusement,
- si le nombre de triangles de la surface est inférieur au nombre de triangles de la zone de dent, ou
- si le nombre de triangles ajoutés après la dilatation est inférieur à un nombre prédéterminé,
nouvelle dilatation de la surface.

Le nombre de dilatations dépend ainsi de l'efficacité de chaque nouvelle passe de dilatation et de la taille de la surface de dent constituée après chaque passe. Ce nombre est donc optimisé pour déterminer les contours les plus extérieurs possibles tout en respectant les formes de la dent.

De préférence, pour déterminer une correspondance entre dent de référence d'une représentation en deux dimensions et une dent du modèle numérique de dents comprenant le maillage triangulaire en trois dimensions, les moyens automatisés mettent en œuvre les étapes suivantes :
- segmentation du maillage triangulaire selon l'un des procédés précédents de manière à identifier des contours d'au moins une dent du maillage,
- obtention d'une représentation en deux dimensions d'une surface de la dent de référence,
- obtention d'une représentation en deux dimensions d'une surface, délimitée par les contours, de la dent du maillage,
- détermination d'une première valeur de rapport entre une hauteur et une largeur de la surface de la dent de référence et d'une deuxième valeur de rapport entre une hauteur et une largeur de la surface de la dent du maillage,
- si une valeur différence entre la première valeur et la deuxième valeur est supérieure à une valeur prédéterminée, identification de la dent du maillage comme non correspondante à la dent de référence,
sinon :
- transformation, selon l'algorithme de Levenberg-Marquardt, de la représentation en deux dimensions de la dent de référence, de manière à comparer par recouvrement les surfaces de la dent de référence et la dent du maillage,
- détermination d'une valeur de recouvrement entre la surface de la dent de référence et la surface de la dent du maillage,
- si la valeur de recouvrement est comprise dans un intervalle prédéterminé, identification de la dent du maillage comme correspondante à la dent de référence.

Ainsi, après obtention de la surface de la dent du maillage, pour chaque dent du maillage, on compare la surface de la dent du maillage, en deux dimensions, à la surface de la dent de référence et on détermine si elles correspondent ou non.

Avantageusement, au lieu d'identifier la dent correspondante directement au moyen de la valeur de recouvrement, les moyens automatisés mettent en œuvre les étapes suivantes :
- découpage de la surface de la dent de référence de manière à distinguer plusieurs parties de la surface,
- découpage correspondant de la surface de la dent du maillage,
- détermination de valeurs en relation avec chaque partie des surfaces déterminées,
- détermination d'une valeur de comparaison entre les valeurs déterminées pour chaque partie de la surface de la dent de référence et les valeurs respectives pour chaque partie correspondante de la surface de la dent du maillage,
- détermination d'une valeur d'identification entre la surface de la dent de référence et la surface de la dent du maillage en fonction de la valeur de comparaison et de la valeur de recouvrement,
- si la valeur d'identification est comprise dans un intervalle prédéterminé, identification de la dent du maillage comme correspondante à la dent de référence.

De cette manière, on tient compte des particularités de forme de chaque dent au moyen des valeurs obtenues en relation avec les parties de chaque dent, de sorte que l'identification de la dent correspondante est plus précise.

De préférence, après avoir déterminé des valeurs de recouvrement ou des valeurs d'identification pour plusieurs dents du maillage vis-à-vis de la dent de référence, les moyens automatisés identifient comme correspondante à la dent de référence la dent du maillage dont la valeur de recouvrement ou d'identification est la plus adéquate.

Ainsi, on effectue une comparaison entre la dent de référence et chaque dent du maillage, et on choisit comme correspondante la dent du maillage qui correspond le mieux à la dent de référence.

Alternativement, on peut prévoir de ne choisir aucune dent du maillage comme correspondante si aucune des dents ne vérifie l'appartenance d'une ou plusieurs valeurs aux intervalles mentionnés.

Avantageusement, une fois la dent du maillage correspondante identifiée, les moyens automatisés identifient à des parties de la dent du maillage correspondante, au sein du maillage, une ou des valeurs de teintes associées à des parties de la dent de référence, les parties de la dent de référence et les parties de la dent du maillage correspondante étant correspondantes entre elles.

Ainsi, on visualise directement au sein du maillage la dent correspondante ainsi que ses valeurs de teinte et/ou de translucidité, et ce en trois dimensions.

On prévoit également selon l'invention un programme d'ordinateur, comprenant des instructions de code aptes à commander la mise en œuvre des étapes d'un procédé tel que décrit précédemment.

On prévoit également selon l'invention un procédé de mise à disposition du programme précédent en vue de son téléchargement sur un réseau de communication.

On prévoit enfin selon l'invention un support lisible par ordinateur, sur lequel est enregistré le programme d'ordinateur précédent.

### Brève description des figures

L'invention sera mieux comprise à la lecture de la description qui va suivre donnée uniquement à titre d'exemple et faite en se référant aux dessins annexés dans lesquels :
[fig.1] la figure 1 est un schéma illustrant le procédé général selon un mode de mise en œuvre de l'invention,
[fig.2] la figure 2 est un schéma illustrant les deux phases principales selon le mode de mise en œuvre de l'invention de la figure 1,
[fig.3] la figure 3 est un schéma illustrant une première phase du mode de mise en œ uvre,
[fig.4] la figure 4 est une représentation d'un modèle numérique utilisé dans la mise en œuvre de l'invention,
[fig.5] la figure 5 est une illustration d'une étape selon le mode de mise en œuvre de l'invention,
[fig.6] la figure 6 est une image résultant de cette étape,
[fig.7] la figure 7 est un schéma illustrant des sous-étapes selon le mode de mise en œ uvre,
[fig.8] la figure 8 est une image résultat de l'une des sous-étapes,
[fig.9] la figure 9 est une image résultat de la même sous-étape,
[fig.10] la figure 10 est un schéma illustrant d'autres sous-étapes selon le mode de mise en œuvre,
[fig.11] la figure 11 est une image résultat de l'une des sous-étapes,
[fig.12] la figure 12 est une image résultat d'une autres des sous-étapes,
[fig.13] la figure 13 est une illustration d'une autre des sous-étapes,
[fig.14] la figure 14 est une image résultant des sous-étapes précédentes,
[fig.15] la figure 15 est une image résultant de la sous-étape suivante,
[fig.16] la figure 16 est une image résultant de la sous-étape suivante,
[fig.17] la figure 17 est un schéma illustrant d'autres sous-étapes selon le mode de mise en œuvre,
[fig.18] la figure18 est une image résultant de l'une des sous-étapes,
[fig.19] la figure 19 est une image résultant d'une sous-étape suivante,
[fig.20] la figure 20 est une image résultant d'une sous-étape suivante et illustrant la fin de la première phase selon le mode de mise en œuvre,
[fig.21] la figure 21 est une illustration d'une deuxième phase selon le mode de mise en œuvre de l'invention,
[fig.22] la figure 22 est une image résultant d'une étape de cette deuxième phase,
[fig.23] la figure 23 est une image résultant d'une étape suivante,
[fig.24] la figure 24 est une image résultant d'une étape suivante, et
[fig.25] la figure 25 est une image résultant de la fin de la deuxième phase.

### Description détaillée

### I. Résumé du procédé selon l'invention

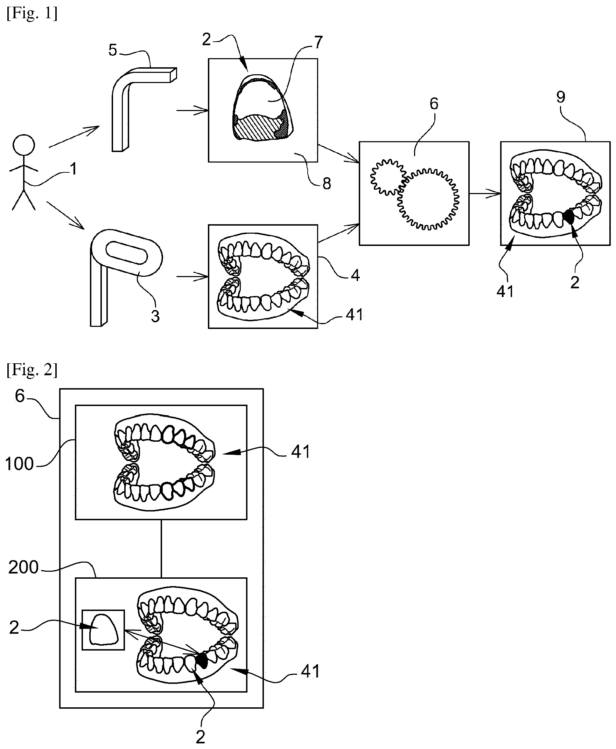

Comme illustré sur la figure 1, d'une part un patient 1 subit la numérisation de son arcade dentaire via un scanner optique 3, et d'autre part le même patient 1 est soumis à une analyse spectrophotométrique de l'une de ses dents, via un spectrophotomètre 5, par exemple au moyen du dispositif nommé « Rayplicker » mis sur le marché par la demanderesse qui déduit des mesures de son spectrophotomètre 5 les valeurs de teinte et de translucidité de la dent. Dans la suite, on parlera indifféremment du spectrophotomètre 5 ou du dispositif, tel que le Rayplicker, qui traite les mesures issues du spectrophotomètre 5.

Le scanner optique 3 permet d'obtenir un modèle numérique 4 de dents comprenant un maillage triangulaire 41 en trois dimensions, c'est-à-dire une représentation numérique en trois dimensions de l'arcade dentaire du patient 1, numérisée par le scanner optique 3. Cette représentation est en l'espèce codée dans un fichier de type « stl », mais elle pourrait correspondre à tout type de fichier 3D, tel que « obj » ou « ply ». Dans ce modèle, la surface 41 formant l'arcade dentaire est représentée par des triangles, qui présentent chacun une normale orientée dans une direction faisant face au triangle. Chaque normale est un vecteur normalisé, dont la longueur est donc de 1. La normale permet de préciser l'orientation du triangle, et de délimiter ce qui est à l'intérieur d'un volume tel que l'arcade dentaire 41, de ce qui est à l'extérieur, la normale étant orientée depuis le triangle vers l'extérieur de l'arcade dentaire. Les coordonnées de chaque sommet des triangles peuvent être déterminées, ainsi que celles de n'importe quel point d'un triangle. Ainsi, les dimensions de l'arcade dentaire 41 sont connues. En revanche, ces triangles représentent tantôt des parties de dent, tantôt de gencive, ou encore d'autres éléments de l'arcade dentaire, et ils ne sont pas identifiés comme faisant partie d'une zone particulière de l'arcade dentaire 41 plutôt qu'une autre. De même, à ces triangles ne sont pas associés des valeurs de teintes et de translucidité de l'arcade dentaire.

Le spectrophotomètre 5 permet lui d'obtenir une représentation 8 en deux dimensions d'une seule dent 2, à laquelle est associée des valeurs de teinte et de translucidité de la dent. Ces valeurs sont associées aux parties de la dent auxquelles elles correspondent. Par exemple la partie 7 de la dent 2 présente une valeur de teinte et une valeur de translucidité, déterminées grâce au spectrophotomètre 5. Ces valeurs peuvent être différentes de celles associées à une autre partie de la dent 2.

L'invention vise notamment à permettre de retrouver la dent 2, issue du spectrophotomètre 5, dans le maillage 41 où toute l'arcade dentaire du patient 1 a été numérisée.

C'est ainsi que des moyens automatisés, tels qu'un ou plusieurs organes 6 de traitement de données, par exemple un ou des ordinateurs, réalisent le procédé visant à atteindre le but mentionné précédemment. Dans la suite, on va désigner par « moyens » ou « moyens automatisés » tout type de moyens automatisés tels que ceux précédemment cités, qui permettent de réaliser des étapes de procédé de manière automatique et numérique, au moyen d'une puissance de calcul fourni par quelque processeur que ce soit, éventuellement également au moyen de réseaux de télécommunications. Ces moyens comprennent ou s'adjoignent les services de bases de données visant à enregistrer ou à obtenir tout type de données nécessaire à la réalisation des étapes présentées, telle que des valeurs calculées, des coordonnées ou encore des images en deux ou trois dimensions. Les étapes présentées dans la suite peuvent donc être écrites sous la forme d'un ou plusieurs programmes d'ordinateur, lequel peut être exécuté automatiquement au choix d'un utilisateur de l'invention.

Par utilisateur de l'invention, on pense en particulier à un dentiste ou à un autre spécialiste du domaine dentaire tel qu'un prothésiste dentaire. Pour interagir avec l'invention, l'utilisateur peut disposer d'une interface où il déclenche l'exécution de l'ensemble des étapes présentées ou seulement de certaines étapes à sa guise. Il peut également visualiser sur cette interface les résultats de l'invention et interagir avec les fichiers ou images qui lui sont présentés.

Comme illustré à la figure 2, une première phase 100 vise à segmenter le maillage 41 de manière à identifier et distinguer les dents au sein du maillage. Il s'agit ainsi d'identifier l'ensemble des triangles appartenant à une même dent, et ce potentiellement pour chaque dent du maillage. Dans une deuxième phase 200, les moyens automatisés 6 déterminent quelle est la dent du maillage 41 qui correspond à la dent 2 issue du spectrophotomètre 5. Enfin, les moyens 6 appliquent les valeurs de teinte et de translucidité de la dent 2 sur la dent 2 correspondante au sein du maillage 41. De cette manière, il est possible de visualiser la dent 2 et ses couleurs au sein du maillage 41, en trois dimensions.

Ainsi, en résultat de la deuxième phase 200, l'utilisateur peut visualiser sur un écran, au sein du maillage des dents 41, la dent correspondante à la dent 2 issue du spectrophotomètre 5, avec les teintes et la translucidité directement appliquées au sein du maillage 41 sur la dent correspondante.

Nous allons désormais revenir sur chacune de ces étapes.

### II. Segmentation au sein du maillage triangulaire

### II.a : identification des zones de dents et de leurs triangles centraux

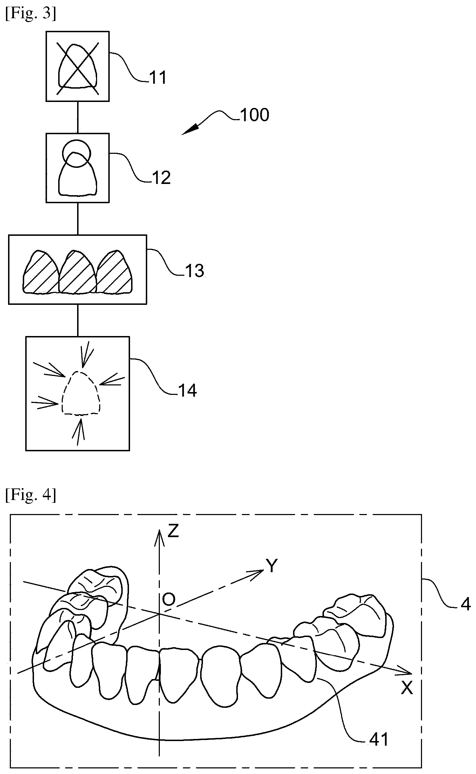

Le procédé correspondant à la phase 100 est illustré à la figure 3 et en référence aux figures 4 à 20. Il s'agit d'identifier les dents au sein du maillage triangulaire 41.

Le modèle numérique 4, comprenant le maillage triangulaire 41 tel qu'illustré à la figure 4, présente une origine O ainsi que trois axes X, Y et Z. Les triangles formant la surface de l'arcade dentaire numérisée 41 présentent chacune une normale sous la forme d'un vecteur. Tous les triangles ont des sommets dont les coordonnées sur chacun des axes, vis-à-vis de l'origine O, sont déterminables automatiquement.

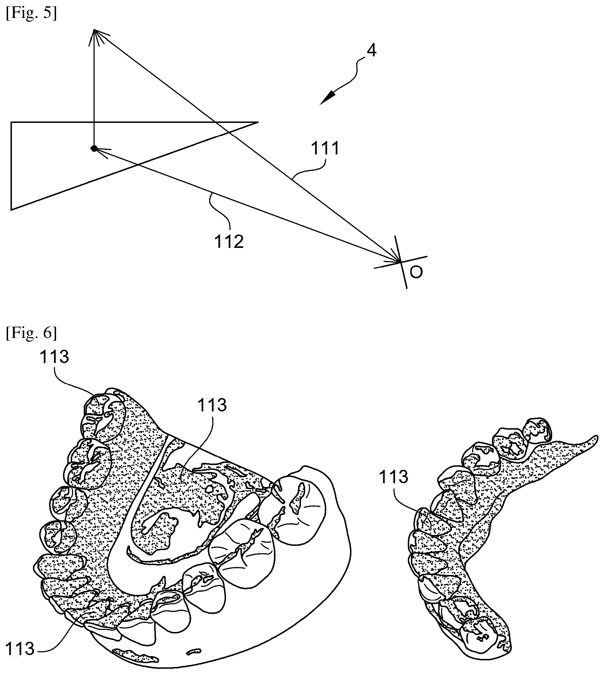

La première étape 11 prévoit d'éliminer les triangles orientés vers l'intérieur du maillage 41, de manière à ne conserver que les triangles reproduisant la surface de l'arcade dentaire exposée, puisque c'est là, à la surface des dents exposée vers l'extérieur, que les valeurs de teinte et de translucidités ont été obtenues. A cet effet, tous les triangles de l'arcade dentaire 41 sont parcourus. Pour chaque triangle, les moyens automatisés 6 déterminent un vecteur allant du centre du triangle jusqu'à l'extrémité de la normale au triangle. Deux distances sont ensuite calculées, en référence à la figure 5 : la distance 111 entre le vecteur et l'origine O du modèle 4 et celle 112 entre le centre du triangle, dont les coordonnées sont calculées au moyen des coordonnées des sommets des triangles, et l'origine O. Si la première distance 111 est supérieure à la seconde 112, cela signifie que la normale du triangle est tournée vers l'extérieur du modèle. Il est ainsi « conservé ». Sinon, il est supprimé car considéré comme tourné vers l'intérieur. Cela signifie qu'il ne sera plus étudié dans les étapes suivantes. Bien entendu, d'autres manières de procéder sont envisageables pour supprimer les triangles orientés vers l'intérieur du modèle. Au lieu de « suppression », on peut parler de « marquage ». En effet, les triangles font dans tous les cas bien entendu toujours partie du modèle numérique, mais il s'agit de ne plus les identifier comme « à traiter » dans les étapes suivantes. On aboutit à l'illustration de la figure 6 où les triangles marqués 113 sont ceux considérés comme tournés vers l'intérieur.

Dans les étapes suivantes, on ne considère plus que les triangles « conservés », qui représentent la surface de l'arcade tournée vers l'extérieur. Cette étape permet donc de supprimer une grande partie des triangles qui n'ont pas d'intérêt aux fins de l'invention et de faire fonctionner les étapes suivantes uniquement sur les triangles restants.

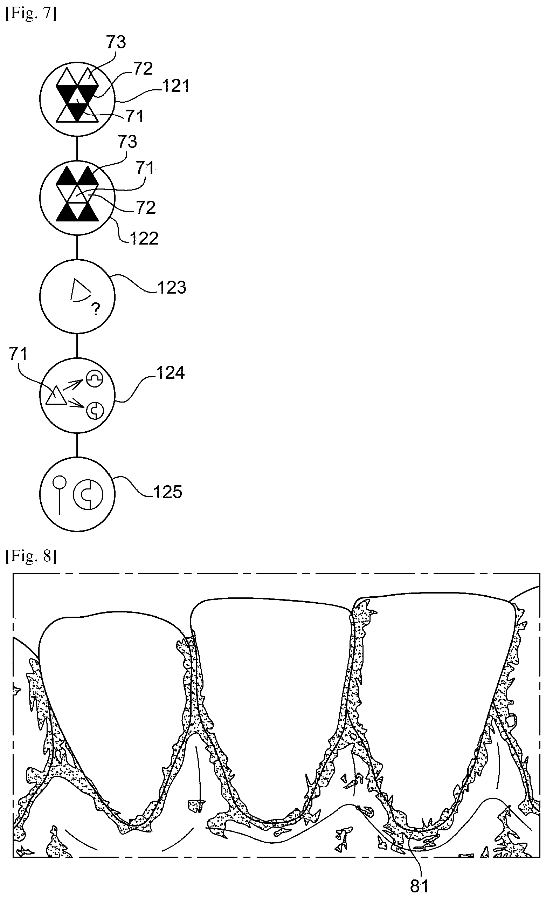

Dans l'étape 12, dont le sous-procédé est illustré en figure 7, on cherche à classifier les triangles en catégorie concave ou en catégorie convexe. On laisse « hors catégorie » ceux qui n'appartiennent à aucune zone concave ou convexe. L'objectif de cette étape est de déterminer les frontières des dents au sein du maillage 41. En effet, les dents sont séparées entre elles par des zones fortement concaves. De même, les zones séparant une dent de la gencive sont concaves. Enfin, la frontière entre la surface de la dent tournée vers l'extérieur du modèle 4, et l'intérieur du modèle 4, en d'autres termes la zone située au sommet des dents, est, elle, fortement convexe.

Pour déterminer ces frontières, il convient d'étudier la courbure entre les triangles. Les moyens automatisés 6 parcourent ainsi chaque triangle du maillage conservé à l'étape précédente. Pour chacun de ces triangles, les moyens déterminent les triangles voisins à la sous-étape 121, c'est-à-dire les triangles qui partagent un segment d'arête ou un sommet en commun avec le triangle considéré. Puis les moyens déterminent à la sous-étape 122 les triangles voisins de ces derniers, qu'on peut appeler « seconds voisins ». La figure 7 illustre ainsi un triangle 71, un triangle voisin 72 et un second voisin 73 qui est donc un triangle voisin du triangle voisin 72, lui-même voisin du triangle 71. Les moyens déterminent alors à la sous-étape 123 les angles entre le triangle et chacun des seconds voisins. En d'autres termes, les moyens calculent les angles entre, d'une part le triangle, d'autre part les triangles voisins aux triangles voisins au triangle. Pour ce faire, les moyens utilisent les normales de chaque triangle. En calculant l'angle entre la normale d'un triangle et celle de son second voisin, on obtient en effet l'angle de courbure entre les deux triangles. De plus, en calculant le produit scalaire entre les normales, on détermine si l'angle est convexe ou concave. Si le produit scalaire est négatif, les moyens lui ajoutent automatiquement 180 ° et il ne pourra pas être considéré comme concave.

Si l'angle entre le triangle parcouru et l'un de son second voisin est situé dans un intervalle allant de 30 à 150°, on considère que le triangle parcouru est potentiellement situé dans une zone concave ou convexe, puisque cette zone de triangles est manifestement courbe. Le choix entre concave et convexe dépend de l'orientation des normales des triangles l'une par rapport à l'autre et est donc déterminé par le produit scalaire entre les deux normales. Ainsi, si le produit scalaire a été négatif et qu'on a dû incrémenter l'angle de 180 °, cet angle sera considéré « convexe ». Sinon, si l'angle était positif à l'origine, il sera considéré « concave ». Ainsi, on incrémente d'une unité un compteur, associé au triangle parcouru, soit pour ajouter l'unité à la catégorie « angle convexe » soit à la catégorie « angle concave » dès qu'un angle entre le triangle parcouru et un de ses seconds voisin est situé, éventuellement après incrémentation de 180°, dans l'intervalle prédéterminé. Cela revient à calculer, pour chaque triangle parcouru, le nombre de seconds voisins fortement inclinés par rapport au triangle parcouru, soit de manière convexe, soit de manière concave.

A la sous-étape 124, pour le triangle parcouru, une fois tous les angles avec les seconds voisins calculés, les moyens déterminent si le triangle parcouru 71 doit être laissé hors catégorie, classé en catégorie « concave » ou classé en catégorie « convexe ». Pour ce faire, les moyens utilisent les compteurs d'angles concaves et convexes. Ces compteurs sont propres à un seul triangle parcouru. Si l'un de ces compteurs présente une valeur supérieure au nombre de voisins du triangle divisé par quatre, alors on considère que le triangle est situé dans une zone respectivement « concave » ou « convexe », et il est donc classifié dans cette catégorie par les moyens. Tous les triangles du maillage sont ainsi, une fois ces étapes terminées, considérés comme « concaves », « convexe », ou « hors catégorie ». Lorsqu'ils sont voisins, ils forment des zones de plusieurs triangles concaves ou convexes.

A l'étape 125, on cherche à supprimer le bruit dans les zones concaves du maillage. En effet, certains triangles risquent d'être classifiés en catégorie concave alors qu'ils sont isolés, ou qu'ils ne forment qu'une faible région. Or, l'objectif est de déterminer des zones importantes de plusieurs triangles concaves qui forment les intersections entre dent et les intersections entre les dents et la gencive. Il s'agit nécessairement de groupements importants de triangles. Les moyens effectuent ainsi une vérification supplémentaire pour chaque triangle parcouru qui aurait été classé en catégorie « concave ». Ils vérifient ainsi, pour chaque triangle « concave », que chacun de ses triangles voisins sont également classés en catégorie concave. Lorsque ce n'est pas le cas, les triangles considérés sont placés « hors catégorie ». Cela revient à effectuer une étape d'érosion en déclassifiant les triangles préalablement situés en catégorie concave qui présenteraient un triangle voisin non classé en catégorie concave. Une deuxième vérification est ensuite effectuée sur chaque triangle restant en catégorie « concave ». Dans cette deuxième vérification, seuls les triangles qui ne possèdent aucun triangle voisin « concave » sont déclassifiés. Cela revient à déclassifier les triangles isolés.

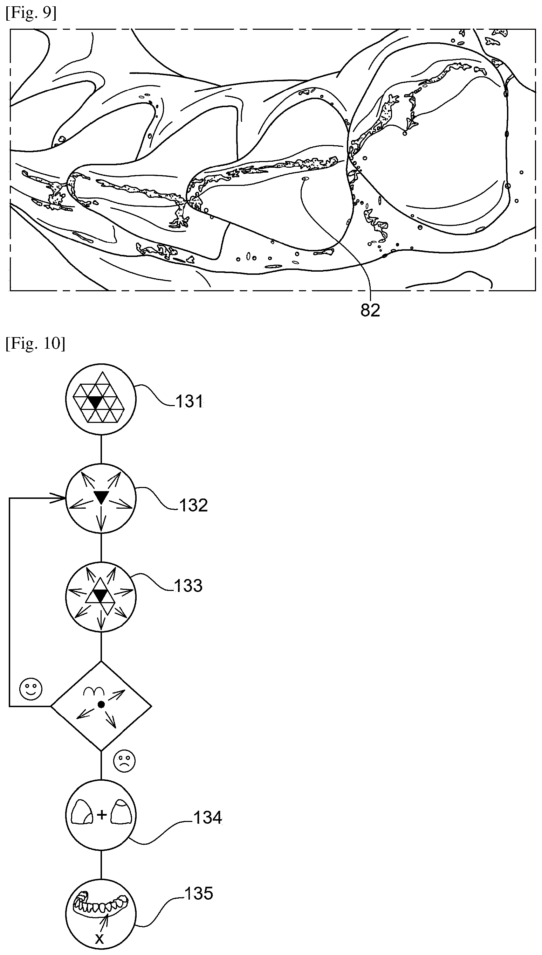

On aboutit alors aux figures 8 et 9. La figure 8 illustre les triangles marqués 81 classés en catégorie concave. La figure 9 illustre les triangles marqués 82 situés en catégorie convexe. On remarque qu'ils correspondent bien à des zones frontières des dents. Les autres triangles conservés dans le maillage mais ni convexes ni concave sont « hors catégorie ».

Maintenant qu'on a supprimé les triangles non importants pour la suite et qu'on a identifié des zones de triangles concaves et des triangles situés dans des portions convexes, qui forment les frontières des dents, l'objectif est d'identifier les zones de dents, à l'étape 13, situées dans les limites de ces frontières. En référence aux sous-étapes de l'étape 13 illustrées à la figure 10, les moyens 6 vont d'abord déterminer des triangles de départ, puis, à partir de ces triangles de départ, identifier des zones de triangles voisins les uns des autres, formant des zones de dents. On va maintenant décrire ces étapes en détails en référence aux figures 10 à 16.

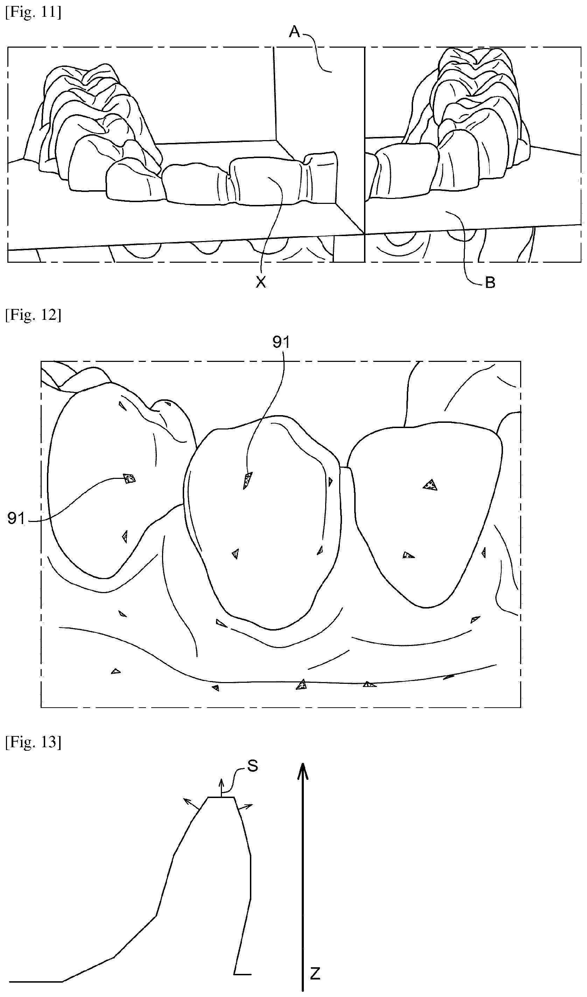

Tout d'abord, à l'étape 131, des triangles de départ sont choisis à la surface du maillage triangulaire. Pour ce faire, les moyens automatisés 6 utilisent, un premier plan A de coordonnée Y fixée, et un deuxième plan B de coordonnée X fixée. Si l'axe X défini par l'intersection de ces plans coupe un triangle du maillage, comme illustré sur la figure 11, alors ce dernier est considéré comme un triangle de départ et enregistré comme tel. Puis l'ordonnée Y est modifiée selon un pas prédéterminé, et le ou les nouveaux triangles de départ coupés sont enregistrés. Le même principe est appliqué pour l'abscisse X, de sorte qu'au final, on détermine à des intervalles réguliers, sur le maillage, des triangles de départ répartis sur toute l'arcade dentaire. Cependant, les moyens automatisés ne conservent comme triangle de départ que les triangles qui sont « hors catégorie », de sorte que ces triangles de départ ne font pas partie de zone frontière entre les dents, mais sont nécessairement situés au sein de dents. On aboutit à l'image de la figure 12, où les triangles marqués 91 sont les triangles « de départ » déterminés. Chacun de ces triangles de départ est indexé comme faisant partie d'une zone de dent qui lui est propre. Ainsi, à la fin de cette étape 131, il y a autant de zones de dents que de triangles de départ, chaque zone de dent n'étant formée que de son triangle de départ.

A l'étape 132, les moyens considèrent chaque triangle de départ 91. Chaque voisin d'un triangle de départ est considéré comme faisant partie d'une même « zone de dent » que le triangle de départ s'il n'est ni concave ni convexe, et si la projection sur l'axe Z de sa normale ne dépasse pas une valeur prédéterminée de 0,75. En effet, de telles valeurs signifieraient que le triangle est situé au sommet d'une dent, en *« zone de mordu »,* qui sont des zones planes mais qui ne correspondent pas à la surface de la dent. Sur la figure 13 sont ainsi illustrées différentes normales, dont l'une référencée S est située sur le sommet. Pour cette dernière, le triangle correspondant, bien que voisin d'un triangle de départ et ni convexe ni concave, ne serait pas sélectionné comme faisant parti de la zone de dents du triangle de départ.

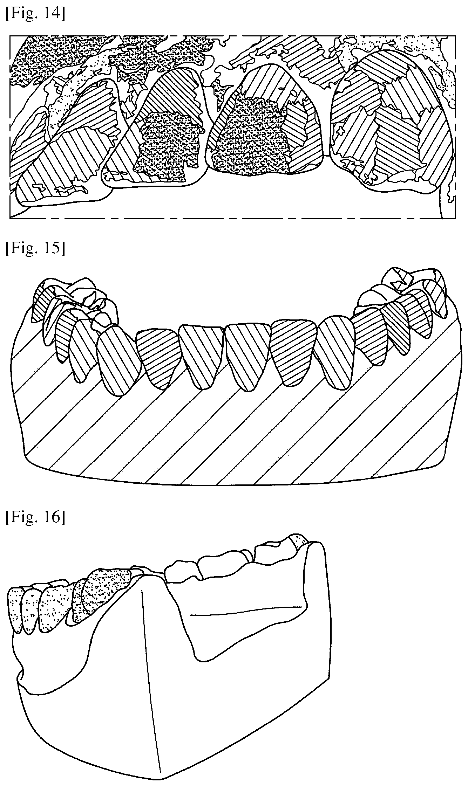

L'étape 133 consiste à considérer, dans chaque zone de dent, les triangles sélectionnés comme, à leur tour, des triangles de départ. L'étape 132 est alors répétée pour chacun de ces nouveaux triangles de départ, de manière à étendre chaque zone aux triangles voisins ni concave, ni convexes, ni situés en zone de mordu, ni assignés à une autre zone. Cette étape 133 se termine lorsqu'il n'existe plus de triangles à ajouter. Ainsi, chaque zone s'est étendue, comme illustré sur la figure 14, de manière à ce que chaque dent présente une ou plusieurs séries de zone de dents voisines les unes des autres. Chaque zone de dent présente un index qui lui est propre. Ainsi, tous les triangles d'une même zone présentent le même index. Grace à l'élimination des triangles concaves, convexes et des zones de mordu, et par le fait que chaque triangle n'est assigné qu'à une seule zone, chaque zone de dent ne s'étend que sur une seule dent et non sur plusieurs.

L'étape 134 consiste alors à fusionner, au sein de chaque dent, les zones comprises dans la dent de manière à ce qu'une dent corresponde à une seule zone.

A cet effet, les moyens 6 identifient les frontières des zones deux à deux, constituées de triangles d'une même zone voisins de triangles d'une seule autre zone.

Une fois toutes les frontières déterminées, si le nombre de triangles de la frontière dépasse un seuil prédéterminé, alors les deux zones sont fusionnées pour n'en former qu'une seule. Le seuil est en l'espèce le résultat du calcul suivant : (nombre de triangles du modèle numérique / 50 000) + 1. Il est donc déterminé par les moyens 6 en fonction du nombre de triangles du modèle. Ce seuil a été fixé de manière empirique et pourrait être différent. De manière générale, il dépend de la résolution du maillage - donc du type de scanner intraoral qui a numérisé l'arcade dentaire du patient - et les moyens 6 peuvent l'adapter automatiquement en fonction du scanner utilisé. La fusion des deux zones signifie que les moyens 6 assignent aux triangles des deux zones le même index. Etant donné que cette assignation se fait sur toutes les frontières en même temps, plus de deux zones peuvent être fusionnées simultanément. Ainsi, si une zone A a un grand nombre de triangles voisins d'une zone B, laquelle a un grand nombre de triangles voisins d'une C, alors les zones A, B et C seraient en même temps fusionnées en une seule zone, dont tous les triangles prendraient le même index.

Cette étape 134 permet d'aboutir à l'image de la figure 15, où chaque dent présente une seule zone de dent, c'est-à-dire que, pour une dent donnée, tous les triangles de la dent présentent le même index, qui est différent de celui des triangles formant une autre dent.

Cependant, à la fin de l'étape 134, le maillage présente, en plus des zones de dents correspondant effectivement à des dents, des zones qui correspondent à d'autres éléments, tels que les gencives. Or, en vue de comparer une dent de ce maillage à une dent en deux dimensions issues d'un spectrophotomètre, il faut veiller à supprimer les zones, qui, projetées en deux dimensions, auraient la forme voire les dimensions d'une dent, mais qui au sein du maillage ne sont sans conteste pas des dents.

C'est pourquoi l'étape 135 vise à supprimer notamment ces zones. Par rapport aux zones de dents, elles se distinguent par le fait que le nombre de triangles de ces zones est très important, au contraire trop faible, ou que ces zones sont singulièrement planes. En dehors des gencives, il arrive aussi que la numérisation de l'arcade dentaire soit effectuée à l'aide d'un socle. Dans ce cas, cette étape permet de supprimer la ou les zones correspondant au socle.

Ainsi, les moyens 6 déterminent la courbure moyenne de chaque zone. A cet effet, les moyens déterminent, grâce aux normales des triangles, la courbure entre chaque triangle et ses triangles voisins, en incrémentant de 180° les angles ayant un produit scalaire négatif. Les moyens en déduisent ainsi la courbure moyenne au sein de la zone. Si cette courbure moyenne est supérieure à 170°, c'est-à-dire proche de 180°, alors cette zone est trop plane pour correspondre à une dent et elle est donc supprimée. Encore une fois, par « suppression », on entend « marquage » de façon à ne plus considérer et traiter ces triangles par la suite. Cela signifie que les triangles de la zone ne présentent plus d'index, ou en tout cas plus d'index correspondant à une zone de dent. En d'autres termes, ils ne peuvent plus être identifiés comme faisant partie d'une dent. Les moyens 6 déterminent également le nombre de triangles de chaque zone. Si ce nombre est inférieur à un premier seuil, ou supérieur à un deuxième seuil, alors les zones sont supprimées de la même manière, car elles sont trop petites ou trop grandes pour correspondre à des dents. Le premier seuil est en l'espèce fixé à 100 triangles. En-dessous de cette valeur, qui pourrait être différente, on considère que la zone ne peut correspondre à une dent car elle est trop petite. Le deuxième seuil correspond au résultat du calcul suivant : (nombre de triangles du modèles / nombre de zones du modèle). Ce seuil, calculé par les moyens 6, dépend donc de la résolution du modèle. Il est volontairement élevé afin d'éviter la suppression par erreur de zones correspondant à des dents.

A la fin de l'étape 13, le maillage triangulaire est donc segmenté. On aboutit à l'image de la figure 16. Une zone de dent correspondant à une dent, et aucune autre zone n'est présentée. Ainsi, en partant du maillage 41 reçu, le procédé menant à l'étape 13 a permis, automatiquement, d'aboutir à la segmentation du modèle pour identifier les triangles appartenant à chacune des dents du maillage 41. Aucune information autre que le maillage n'a été fournie aux moyens 6. En particulier, il n'a pas été nécessaire d'identifier manuellement un ou plusieurs triangles. L'utilisateur du procédé n'a donc pas eu à agir pour que la segmentation soit réalisée automatiquement.

Cependant, bien que ce procédé aboutisse à une segmentation des dents, les contours des dents, ou certains d'entre eux, peuvent rester imprécis. En effet, en éliminant les triangles situés en zone convexe, en zone concave, et en éliminant les triangles orientés vers l'intérieur et les triangles situés en zone de mordu, on a pu éliminer des triangles qui en réalité devraient faire partie de la dent. Les frontières des dents peuvent donc être légèrement différentes de la forme et des dimensions des frontières réelles. Or, dans le but de comparer la dent 2 en deux dimensions, issue du spectrophotomètre 5, au maillage 41 afin de l'y retrouver, il est nécessaire que les contours des dents du maillage 41 soient précis, afin de ne pas identifier une mauvaise dent du maillage comme correspondante à la dent 2 ou de ne pas réussir à identifier de dent correspondante.

### II.b identification des contours de chaque dent

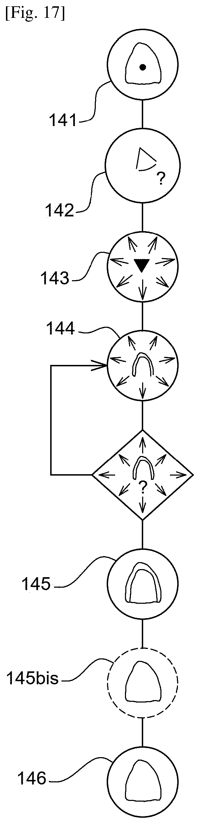

C'est pourquoi le procédé de la phase 14, tel qu'illustré à la figure 17, prend la suite de l'étape 14 et vise à déterminer les contours précis des dents.

A cet effet, l'étape 141 vise à déterminer le centre des zones de dents segmentées à l'étape 13. A cet effet, les moyens 6 déterminent, pour chaque zone, les coordonnées du centre de chaque triangle de la zone, au moyen des coordonnées des sommets du triangle au sein du modèle numérique. Puis ils déterminent les coordonnées du centre de la zone au moyen des coordonnées calculées des centres de chaque triangle.

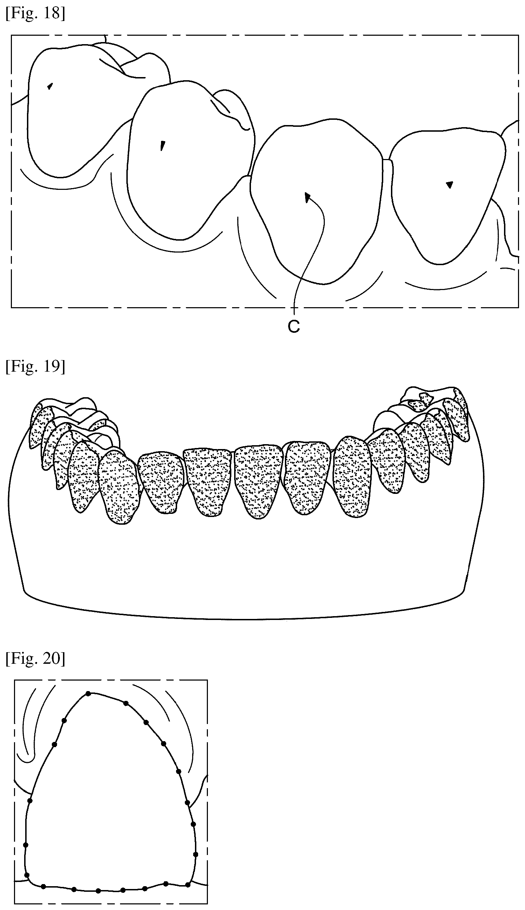

Les coordonnées du centre de la zone étant connues, les moyens 6 déterminent quel est le triangle de la zone le plus proche de ce centre. Pour cela, ils comparent les distances entre les centres de chaque triangle et le centre de la zone, et assignent au triangle dont le centre est le plus proche, le rôle de triangle central de la zone. Cela étant réalisé pour chaque zone, on aboutit à l'image de la figure 18 où chaque dent du maillage présente un triangle central, par exemple référencé C pour l'une des dents, identifié.

A l'étape 142, pour chaque zone, les moyens 6 travaillent de la manière suivante : ils déterminent, pour chaque triangle de la zone, quel est l'angle moyen entre ce triangle et ses triangles voisins, en calculant toutes les valeurs d'angles entre ce triangle et ses voisins. Si la valeur de l'angle moyen est inférieure à -0,05 radians, alors le triangle est considéré comme faisant partie de la surface de la dent. Ce seuil a été déterminé de manière à sélectionner des triangles appartenant à une dent plane, telle qu'une molaire ou une incisive, mais aussi ceux appartenant à une dent bombée, telle qu'une canine. On pourrait modifier ce seuil pour le rendre dépendant de la résolution du modèle numérique.

Ensuite, à l'étape 143, les moyens 6 débutent un algorithme de « Region-Growing » qui vise à partir du centre de chaque zone, identifiés à l'étape 141, et à identifier tous les triangles formant une surface de la dent, jusqu'aux extrémités de la dent. Ils identifient ainsi tous les triangles voisins du triangle central et de la même zone comme faisant également partie de la surface, même ceux qui n'ont pas été identifiés comme tels dans l'étape 142 précédente. Puis, pour chacun de ces triangles identifiés comme faisant partie de la surface, les moyens identifient leurs triangles voisins et de la même zone comme faisant partie de la surface de la dent. De cette manière, la surface de la dent comprend d'abord tous les triangles de la dent dont la valeur de courbure moyenne est inférieure à -2.864 degrés, mais aussi tous les triangles qui sont liés par un chemin de triangles voisins au triangle central, et qui font partie de la même zone de dent. Cet ajout continue de triangles voisins s'achève lorsqu'il n'y a plus de triangles à ajouter car ils font partie d'une autre zone ou d'aucune zone. A la fin de cette étape 142, la surface de dent, comprenant tous les triangles identifiés comme en faisant partie, correspond environ à la dent. En particulier, la surface ne comprend normalement pas de trou, c'est-à-dire de triangle non identifié comme en faisant partie mais entouré de triangles en faisant partie. Seuls ses contours peuvent être reprécisés, et c'est l'objet des étapes suivantes.

Ainsi, à l'étape 144, une étape de dilatation est réalisée. Il s'agit pour les moyens d'ajouter, pour tout triangle de la surface, ses triangles voisins, même s'ils n'avaient pas été sélectionnés à l'étape 142. Ainsi, la surface s'étend encore plus.

Cette étape de dilatation peut être répétée un certain nombre de fois. Si le nombre de triangles de la surface est inférieur au nombre de triangles de la zone de dent et si l'étape de dilatation précédente a permis l'ajout d'au moins vingt triangles à la surface, alors une nouvelle étape de dilatation est réalisée, et ainsi de suite tant que les conditions sont réunies pour une dilatation supplémentaire. Bien entendu, les triangles ajoutés à la surface de dent doivent faire partie de la même zone de dent.

A l'étape 145, une étape d'érosion est réalisée par les moyens 6. Il s'agit de supprimer les triangles dont tous les voisins ne feraient pas partie de la même surface. En d'autres termes, si un triangle présente un triangle voisin ne faisant pas partie de sa surface, il est désélectionné, ou désidentifié. Il ne fait plus partie de la surface.

A la fin de l'étape 145, toutes les dents présentent chacun une surface faite de triangles, et, pour une dent donnée, les frontières de la surface correspondent plus à celle de la dent que les frontières de la zone de dent. On aboutit ainsi à l'image de la figure 19. Ainsi, les contours de chacune de ces surfaces peuvent être déterminés.

Optionnellement, une étape supplémentaire 145 bis vise à désélectionner certains triangles de la surface qui seraient orientés trop différemment du reste de la dent. Ainsi, les moyens 6 déterminent la normale moyenne de la surface au moyen des normales de chaque triangle de la surface. Puis, pour chaque triangle de la surface, l'angle entre la normale moyenne et la normale du triangle est calculé. Si sa valeur est supérieure à 50° ou inférieure à -50°, le triangle est désélectionné : il ne fait plus partie de la surface. Cette étape optionnelle vise à ajuster la forme qu'aura la dent une fois qu'elle sera projetée en deux dimensions et comparée au contour 2D de la dent 2 issue du spectrophotomètre 5. Elle est optionnelle car elle vise à adapter la dent du maillage 4 à celle issue du spectrophotomètre 5. En effet, l'image issue du Rayplicker, prise au moyen d'un grand angle, peut être déformée relativement à l'image d'une dent issue du maillage. Cependant, cette déformation dépend du dispositif de prise de teinte - ici le Rayplicker - et c'est pourquoi elle est optionnelle. Ainsi, elle n'est pas nécessaire pour toutes les comparaisons, par exemple pour des dents de référence dont les images seraient issues d'un autre dispositif qui ne les déformerait pas. De plus, à sa place, une étape similaire pourrait plutôt être appliquée sur le contour 2D de la dent 2 de référence de manière à déformer le contour de la dent 2, si elle est issue d'un spectrophotomètre qui déforme légèrement la forme des dents tel que le spectrophotomètre 5 du « Rayplicker ».

A l'étape 146, le principe des courbes de Bézier est appliqué à chaque surface de dent, de manière à construire une courbe identifiant précisément les contours de chaque surface.

A cet effet, pour chaque surface de dent, les moyens 6 déterminent les triangles formant le contour de la surface, en sélectionnant les triangles qui présentent un triangle voisin non identifié comme faisant partie de la surface. Les moyens 6 déterminent le nombre de « points de contrôle » tels que définis dans l'algorithme des courbes de Bézier, en fonction du nombre de triangles formant le contour de la surface. Alternativement, ce nombre de points de contrôle pourrait dépendre du nombre de triangles formant l'ensemble de la surface. Enfin, en parcourant chacun des triangles de ce contour, un point de contrôle est déterminé à intervalles de triangles réguliers. A partir de ces points de contrôle, les courbes de Bézier peuvent être déterminées. Elle représente le contour de la surface de la dent, tel qu'illustré à la figure 20.

A la fin de l'étape 14, le procédé de segmentation est terminé. Ainsi, en partant du maillage 41, les moyens 6 ont automatiquement déterminé les contours de chaque dent du maillage et ce de manière précise et sans autre information fournie par l'utilisateur. La phase 100, englobant les étapes 11 à 14 et consistant à obtenir les contours des dents, est donc terminé. Désormais, les contours des dents peuvent être utiles à différentes fins. Dans la suite, le procédé 200 va utiliser ces contours pour trouver, au sein du maillage 41, quelle dent correspond à la dent 2 en deux dimensions issue du spectrophotomètre 5. Il s'agit ainsi de pouvoir associer les teintes et translucidités de cette dent 2, à la dent correspondante du maillage 41 au sein du modèle 4.

### III. Correspondance entre dent 2D et maillage 3D

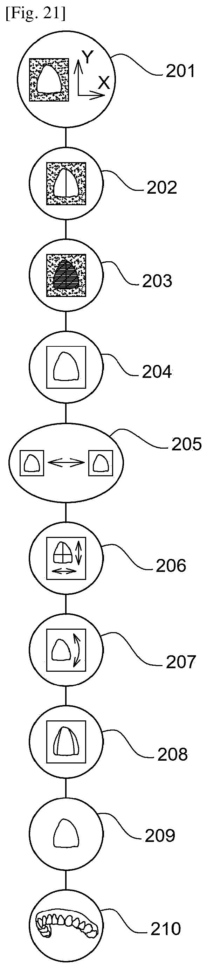

On va maintenant décrire le procédé 200 illustré à la figure 21. Il s'agit de comparer la représentation de la dent 2, issue du spectrophotomètre 5, au maillage 41 segmenté afin d'y trouver la dent correspondante.

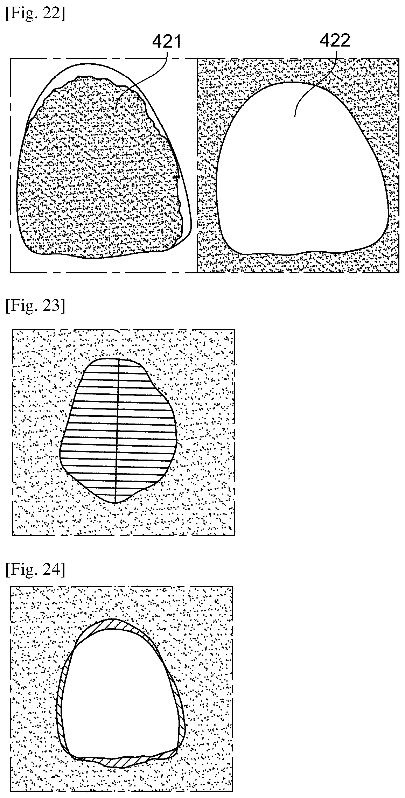

A l'étape 201 du procédé 200, les moyens 6 obtiennent des représentations en deux dimensions des contours de chaque dent segmentée. Les contours sont ceux déterminés en fin du procédé 100, mais ce procédé 200 s'applique aussi à des contours de dent déterminés d'une autre manière. Ainsi, chaque contour de dent est projeté sur une surface sensiblement parallèle à la dent. Ainsi, pour une dent quelconque 421 du maillage illustré à la figure 22 en trois dimensions, on obtient une image 422 correspondante représentant le contour en deux dimensions. La surface est remplie de pixels blancs, l'extérieur de la surface est rempli de pixels noirs. L'image 422 est donc binaire. Les moyens déterminent ainsi la surface de chaque dent du maillage en deux dimensions. Les moyens déterminent également une image de la surface de la dent 2, laquelle est déjà représentée en deux dimensions. La suite consiste à comparer cette image de la surface de la dent 2 à chacune des images des surfaces du maillage en deux dimensions. Dans la suite, on fera référence à la dent dont les mesures ont été prise par spectrophotométrie, comme étant la « dent de référence ». On cherche parmi les dents du maillage la « dent correspondante » à la dent de référence.

On effectue les étapes suivantes pour chaque surface - celles des dents du maillage comme celle de la dent de référence. Chaque pixel d'une surface a une abscisse sur un axe X horizontal et une ordonnée sur un axe Y vertical.

A l'étape 202, on cherche d'abord à déterminer un axe, par une fonction affine de la forme a*x+b, séparant la surface en deux de manière verticale, de façon à partager la surface en deux parties égales. Pour ce faire, les moyens 6 déterminent d'abord la coordonnée ymid centrale de la surface, au moyen de la coordonnée ymin du pixel de la surface le plus bas et de la coordonnée ymax du pixel de la surface le plus haut. Puis les moyens déterminent deux points : le premier point présente les coordonnées X et Y moyennes, de tous les pixels de la surface situés dans l'intervalle [ymin + (ymid-ymin)/4 ; ymid - (ymid-ymin)/4]. Le deuxième point présente les coordonnées X et Y moyennes, de tous les pixels de la surface situés dans l'intervalle [ymid + (ymax-ymid)/4 ; ymax - (ymax-ymid)/4]. Enfin, les moyens 6 déterminent l'axe coupant ces deux points au moyen de la fonction affine de type a*x+b correspondante. La surface de la dent est alors divisée en deux parties, l'une à gauche, l'autre à droite de l'axe déterminé.

A l'étape 203, les moyens 6 déterminent 19 axes sensiblement horizontaux de manière à diviser la surface de la dent en 20 parties concomitantes de haut en bas, les axes étant à distance égale les uns des autres. Pour ce faire, les moyens reproduisent des calculs similaires à ceux de l'étape 202, mais cette fois, au lieu de séparer en deux parties selon un axe vertical, ils visent à séparer la surface en 20 parties selon un axe horizontal. Les 20 parties sont découpées de la façon suivante : à partir de l'axe déterminé lors de l'étape 202, 19 points sont déterminés. À chacun de ces points, une fonction affine orthogonale à la fonction déterminée lors de l'étape 202 est déterminée. On peut ainsi parler de « découpage » de l'image. On aboutit alors à l'image de la figure 23 où une surface est découpée en deux parties en 40 parties.

A l'étape 204, les moyens 6 vont déterminer 40 valeurs, associés à des points précis de la surface permettant de la comparer à d'autres surfaces.

Ainsi, pour chacun des 40 axes horizontaux, (20 axes horizontaux chacun séparés par l'axe vertical) les moyens déterminent la longueur de l'axe, c'est-à-dire la distance, en nombre de pixels, entre le point de la surface situé sur l'axe horizontal et le plus éloigné de l'axe vertical, et d'autre part cet axe horizontal. La distance est enregistrée et associée à l'axe horizontal.

A l'étape 205, les moyens effectuent des comparaisons entre chaque surface de dent issue du maillage et la surface de la dent de référence. Les distances calculées à l'étape 204 sont comparées deux à deux pour les axes correspondants. Ainsi, pour chaque comparaison entre la surface de la dent de référence et la surface d'une dent du maillage, les moyens déterminent la différence moyenne entre chaque distance calculée à l'étape 204 pour la surface de la dent de référence d'une part et la distance correspondante de la surface de la dent à comparer d'autre part. Plus la différence moyenne est faible, plus il est probable que la dent du maillage comparée corresponde à la dent de référence. Cette distance moyenne est enregistrée et sera utilisée par la suite pour déterminer la dent correspondante.

A l'étape 206, les moyens 6 déterminent, pour chaque surface, un ratio hauteur/ largeur, c'est-à-dire le rapport entre la hauteur de la dent - la distance maximale selon l'axe Y entre deux points de la surface de la dent - et la largeur de la dent - la distance maximale selon l'axe X entre deux points de la surface. Chaque ratio des dents du maillage est comparé au ratio de la surface de la dent de référence. Si la différence entre le ratio de la dent de référence et celui d'une dent du maillage est inférieur à 0.4, alors la dent à comparer est sélectionnée pour l'étape suivante. Sinon, non.

A l'étape 207, la surface de la dent de référence est transformée au moyen de l'algorithme de Levenberg-Marquardt. Il s'agit de modifier sa position dans sa représentation en deux dimensions, mais aussi éventuellement de la faire tourner ou de modifier sa taille pour pouvoir ensuite la superposer aux surfaces des dents du maillage et calculer un coefficient de recouvrement pertinent.

Une alternative à l'utilisation de l'algorithme de Levenberg-Marquardt est de réaliser une rotation du contour de la dent de référence afin que l'orientation des deux contours - celui de la dent de référence et celui de la dent du maillage - soit identique. Pour cela, une valeur d'angle de rotation est calculée à partir de l'axe vertical déterminé lors de l'étape 203. Une rotation correspondante est ensuite effectuée sur le contour de la dent de référence à partir de cet angle. Cette méthode semble fournir de meilleurs résultats que l'algorithme de Levenberg-Marquardt tout en rendant cette étape 207 plus rapide.

A l'étape 208, les moyens 6 déterminent, pour chaque surface sélectionnée à l'étape 206, son coefficient de recouvrement vis-à-vis de la surface de la dent de référence transformée à l'étape 207. Ce coefficient de recouvrement est déterminé en plaçant la surface de la dent de référence sous la surface de la dent à comparer. On aboutit à l'image de la figure 24. Le nombre de pixels appartenant aux deux surfaces est ainsi déterminé et comparé au nombre total de pixels des deux surfaces. Une manière de calculer ce coefficient de recouvrement est de déterminer le nombre de pixels, de l'image 24 de recouvrement, n'appartenant à la fois qu'au contour de la surface et qu'au contour de la dent de référence.

A l'étape 209, les moyens calculent la différence finale entre la surface de la dent de référence et chaque surface sélectionnée à l'étape 206. Ce calcul tient compte de la distance moyenne, en pixels, calculée à l'étape 205 et du coefficient de recouvrement de l'étape 208. La formule est la suivante : (2 * distance moyenne + coefficient de recouvrement) / 3. Pour la valeur la plus faible, la dent qui a servi de comparaison est considérée comme correspondante à la dent de référence.

Les moyens 6 ont ainsi automatiquement déterminé la dent correspondante du maillage 41 à la dent de référence 2 dont la représentation est issue du spectrophotomètre 5.

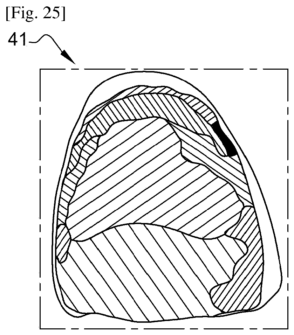

A l'étape 210 finale, les moyens 6 appliquent les valeurs de teinte et de translucidité calculées par le spectrophotomètre 5 sur la dent 2, à la dent correspondante au sein du maillage. Cela peut être visualisé sur le maillage triangulaire de l'arcade dentaire, où sur la dent correspondante est plaquée une texture correspondant à la dent de référence, de manière à visualiser directement les valeurs de teinte et de translucidité dans le fichier 3D, sur la dent correspondante. Pour ce faire, la texture, dont les valeurs sont issues du spectrophotomètre et qui est en deux dimensions, est étirée pour couvrir la surface 3D du maillage triangulaire. Ainsi, en fin de procédé, les moyens 6 exportent un dossier comprenant le fichier « stl » du maillage 4, un fichier comprenant les valeurs de teinte et de translucidité, et un fichier comprenant toutes les informations de segmentation et identifications déterminées grâce au procédé décrit, faisant le lien entre le maillage et les valeurs de teinte et de translucidité. C'est ce dossier qui permet, via un logiciel tel que le logiciel « Rayplicker » au nom de la demanderesse, de visualiser l'arcade dentaire avec les teintes associées en son sein. Un prothésiste peut en extraire le fichier stl comprenant le maillage afin d'usiner la prothèse. Le logiciel permettant de visualiser l'arcade avec les teintes en son sein est bien entendu de préférence le même que celui qui permet l'exécution du procédé de l'invention. Alternativement, d'autres logiciels de visualisation peuvent permettre de visualiser l'arcade et les teintes en son sein. On aboutit ainsi à une dent du maillage triangulaire telle qu'illustrée à la figure 25, où des portions de dent correspondent à des valeurs de teintes et/ou de translucidité particulière et sont affichées au sein du maillage 41, dans le modèle numérique 4.

L'invention n'est pas limitée aux modes de réalisation présentés et d'autres modes de réalisation apparaîtront clairement à l'homme du métier.

Ainsi, alternativement à l'étape 210 où est choisie la dent du maillage qui correspond le mieux à la dent de référence, on peut prévoir une fonctionnalité permettant de choisir manuellement une autre dent comme dent correspondante parmi les dents segmentées. Les moyens peuvent aussi trier les dents segmentées de manière à fournir une liste ordonnée de dents correspondantes à la dent de référence, de sorte que si la première dent de la liste n'est pas la bonne, la dent suivante est proposée à l'utilisateur.

Il est également envisageable de prévoir une situation où aucune dent correspondante n'est déterminée à l'étape 210. Cela peut être le cas si aucune dent n'a été sélectionnée à l'étape 206, ou si la valeur de différence finale la plus faible n'est pas inférieure à une valeur prédéterminée. D'autres manières d'écarter toute dent du maillage comme étant correspondante sont envisageables.

Le spectrophotomètre 5, embarqué dans le Rayplicker de la demanderesse, est un moyen de mesure particulier qui vise à obtenir les valeurs de teinte et de translucidité par transmission ou réflexion suivant différentes longueurs d'ondes. On peut l'appeler aussi spectrocolorimètre. Cependant, dans le cadre de l'invention, tout type d'organe ou d'appareil permettant d'obtenir les valeurs de teinte et/ou de translucidité d'une dent est acceptable. En effet, l'invention est indépendante de la manière dont est obtenue la surface de la dent de référence en deux dimensions et à laquelle sont associées les valeurs de teinte et/ou de translucidité. L'invention utilise cette surface pour retrouver la dent de cette surface au sein du maillage et donc son origine n'importe pas.

De la même manière, le type de scanner intraoral fournissant le maillage 4 n'importe pas.

Par ailleurs, plutôt qu'une arcade totalement numérisée, le procédé de segmentation pourrait porter sur une arcade dentaire partielle. Dans tous les cas, si l'arcade comprend une dent, le procédé permet de l'identifier.

Il est également possible de faire varier toutes les valeurs de seuils ou d'intervalles présentées dans la mesure où les valeurs choisies permettent d'atteindre l'effet technique souhaité. En outre, les formules et manières de calculer les valeurs ou intervalles présentés peuvent être modifiées là encore dans le but d'atteindre l'effet technique souhaité.

Par ailleurs, il est possible de stopper l'un des procédés présentés à toute étape. En particulier, les zones de dents déterminées à l'étape 13 peuvent suffire à certaines manipulations. De même, les surfaces de dents déterminées à l'étape 144 ou leurs contours déterminés à l'étape 145 peuvent par la suite être comparées à des dents d'une autre manière que celle du procédé 200. Corollairement, le procédé 200 peut utiliser des contours de dent segmentées d'une autre manière que celle du procédé 100. Il est par exemple envisageable de permettre à l'utilisateur de dessiner ou désigner lui-même les contours des dents sur une interface. Cependant, le procédé 100 est particulièrement adapté pour fournir des contours de dents permettant à la comparaison du procédé 200 d'être optimale et l'enchainement des deux procédés peut être automatique, sans intervention de l'utilisateur.

## Revendications

1. Procédé (100) de segmentation d'un modèle numérique (4) de dents comprenant un maillage triangulaire (41) en trois dimensions, **caractérisé en ce que** des moyens automatisés (6) mettent en œuvre les étapes suivantes, dites étapes initiales :
- classification (12), au sein du maillage (41), de chaque triangle en catégorie concave (81), convexe (82) ou hors catégorie convexe ou concave, et
- identification (13), au sein du maillage (41), d'au moins une zone de dent comprenant des triangles tels que chaque triangle de la zone présente au moins un triangle voisin dans la zone, tous les triangles de la zone étant hors catégorie convexe ou concave.

2. Procédé (100) selon la revendication précédente, dans lequel, pour réaliser l'étape de classification (12) d'un triangle (71) en catégorie concave, convexe ou hors catégorie convexe ou concave, les moyens automatisés (6) mettent en oeuvre les sous-étapes suivantes :
- détermination de valeurs d'angles (123) entre le triangle (71) et chaque triangle voisin (73) de chaque triangle voisin (72) au triangle (71), et
- en fonction des valeurs d'angles déterminées, classification (124) du triangle en catégorie concave, convexe ou hors catégorie convexe ou concave.

3. Procédé (100) selon la revendication précédente, dans lequel les moyens automatisés (6) déterminent les valeurs d'angles au moyen de la normale du triangle et des normales de chaque triangle voisin (73) de chaque triangle voisin (72) au triangle (71).

4. Procédé (100) selon l'une quelconque des revendications 2 à 3, dans lequel, pour au moins un triangle en catégorie concave, les moyens automatisés (6) mettent en œuvre les étapes suivantes :
- détermination (125) du nombre de triangles voisins au triangle qui sont en catégorie concave, et
- si le nombre est inférieur à une valeur prédéterminée, retrait du triangle de la catégorie concave.

5. Procédé (100) selon l'une quelconque des revendications précédentes, dans lequel, pour réaliser l'étape d'identification (13) de la zone de dent, les moyens automatisés (6) mettent en œuvre les sous-étapes suivantes :
- détermination, (131) au sein du maillage, d'un triangle de départ (91) hors catégorie concave ou convexe,
- sélection (132, 133) de triangles voisins au triangle de départ (91), hors catégorie convexe ou concave et dont les normales respectives présentent des valeurs comprises dans un intervalle prédéterminé, et
- en considérant chacun des triangles sélectionnés comme un triangle de départ, répétition de l'étape précédente (132, 133) pour chaque triangle de départ, jusqu'à l'absence de triangles hors catégorie à sélectionner, de manière à identifier la zone de dent comprenant les triangles sélectionnés.

6. Procédé (100) selon l'une quelconque des revendications précédentes,
dans lequel les moyens automatisés (6) mettent en œuvre les étapes suivantes :
- pour la ou au moins l'une des zones de dents, détermination d'un nombre de triangles voisins situés dans une zone de dent voisine à la zone de dent,
- si le nombre de triangles voisins est supérieur à une valeur prédéterminée, fusion (134) de la zone de dent avec la zone de dent voisine de manière à ce que les deux zones ne forment qu'une zone de dent.

7. Procédé (100) selon l'une quelconque des revendications précédentes,
dans lequel les moyens automatisés (6) mettent en œuvre les étapes suivantes :
- pour la ou au moins l'une des zones de dents, détermination du nombre de triangles de la zone et d'une valeur de courbure moyenne de la zone,
- si le nombre de triangles est supérieur à une valeur maximale prédéterminée, inférieur à une valeur minimale prédéterminée, et/ou si la valeur de courbure moyenne est inférieure à un seuil prédéterminé, marquage (135) de la zone de dent de manière à ne plus identifier les triangles de la zone de dent comme faisant partie d'une zone de dent.

8. Procédé (100, 200) selon l'une quelconque des revendications précédentes,
dans lequel, après les étapes initiales, les moyens automatisés (6) mettent en œuvre les étapes suivantes :
- pour la ou au moins l'une des zones de dents, détermination (141) d'un triangle de base (C) de la zone de dent,
- à partir du triangle de base (C), détermination (14) de contours d'une dent comprenant le triangle de base (C).

9. Procédé (100, 200) selon la revendication précédente, dans lequel, le triangle de base (C) étant un triangle central situé au centre de la zone de dent, les moyens automatisés (6) mettent en œuvre les étapes suivantes pour sa détermination :
- détermination des coordonnées, au sein du maillage (41), du centre de la zone de dent, au moyen des coordonnées du centre de chaque triangle de la zone de dent, et
- détermination du triangle central de la zone de dent en comparant les coordonnées de chaque triangle de la zone de dent avec les coordonnées du centre de la zone déterminées et en identifiant comme triangle central le plus proche du centre de la zone de dent.

10. Procédé (100, 200) selon la revendication 8 ou 9, dans lequel, pour réaliser la détermination (14) des contours de la dent, les moyens automatisés mettent en œuvre les étapes suivantes :
- pour chaque zone de dent, identification de chaque triangle de base (C) de la zone de dent comme faisant partie d'une surface de dent correspondante à la zone de dent
- pour chaque zone de dent, détermination (142) de valeurs d'angles entre chaque triangle de la zone et les voisins du triangle,
- détermination (142) d'une valeur d'angle moyen pour chaque triangle de la zone en fonction des valeurs d'angles déterminées,
- si la valeur d'angle moyen est inférieure à une valeur prédéterminée, identification du triangle comme faisant partie de la surface de dent correspondante à la zone de dent,
- pour chaque triangle voisin au triangle de base, si le triangle voisin appartient à la zone de dent du triangle de base, identification (143) du triangle voisin comme faisant partie de la surface de dent correspondante à la zone de dent,
- en considérant chaque triangle voisin sélectionné comme un triangle de base, répétition (143) de l'étape précédente pour chaque triangle de base, jusqu'à l'absence de triangle de la zone à identifier comme faisant partie de la surface,
- pour chaque surface de dent, dilatation (144) de la surface en ajoutant à la surface des triangles qui sont voisins des triangles de la surface et qui appartiennent à la même zone de dent que les triangles de la surface,
- pour chaque surface de dent, érosion (145) de la surface en supprimant de la surface des triangles dont un voisin appartenant à la même zone de dent n'est pas identifié comme faisant partie de la surface,
- détermination (146) des contours de la surface de la dent au moyen du calcul d'une ou plusieurs courbes de Bézier.

11. Procédé (100, 200) selon l'une quelconque des revendications 8 à 10, dans lequel, pour déterminer une correspondance entre dent de référence (2) d'une représentation en deux dimensions et une dent du modèle numérique (4) de dents comprenant le maillage triangulaire (41) en trois dimensions, les moyens automatisés (6) mettent en œuvre les étapes suivantes :
- segmentation (100) du maillage triangulaire selon l'une quelconque des revendications 10 à 13 de manière à identifier des contours d'au moins une dent du maillage,
- obtention (201) d'une représentation en deux dimensions d'une surface de la dent de référence,
- obtention (201) d'une représentation en deux dimensions d'une surface, délimitée par les contours, de la dent du maillage,
- détermination (206) d'une première valeur de rapport entre une hauteur et une largeur de la surface de la dent de référence et d'une deuxième valeur de rapport entre une hauteur et une largeur de la surface de la dent du maillage,
- si une valeur différence entre la première valeur et la deuxième valeur est supérieure à une valeur prédéterminée, identification de la dent du maillage comme non correspondante à la dent de référence (2),
sinon :
- transformation (207), selon l'algorithme de Levenberg-Marquardt, de la représentation en deux dimensions de la dent de référence (2), de manière à comparer par recouvrement les surfaces de la dent de référence et de la dent du maillage,
- détermination (208) d'une valeur de recouvrement entre la surface de la dent de référence (2) et la surface de la dent du maillage,
- si la valeur de recouvrement est comprise dans un intervalle prédéterminé, identification (210) de la dent du maillage comme correspondante à la dent de référence.

12. Procédé (100, 200) selon la revendication précédente, dans lequel, au lieu d'identifier la dent correspondante directement au moyen de la valeur de recouvrement, les moyens automatisés mettent en œuvre les étapes suivantes :
- découpage (202, 203) de la surface de la dent de référence de manière à distinguer plusieurs parties de la surface,
- découpage (202, 203) correspondante de la surface de la dent du maillage,
- détermination (204) de valeurs en relation avec chaque partie des surfaces déterminées,
- détermination (205) d'une valeur de comparaison entre les valeurs déterminées pour chaque partie de la surface de la dent de référence et les valeurs respectives pour chaque partie correspondante de la surface de la dent du maillage,
- détermination (209) d'une valeur d'identification entre la surface de la dent de référence et la surface de la dent du maillage en fonction de la valeur de comparaison et de la valeur de recouvrement,
- si la valeur d'identification est comprise dans un intervalle prédéterminé, identification (210) de la dent du maillage comme correspondante à la dent de référence.

13. Procédé (100, 200) selon l'une quelconque des revendications 11 ou 12, dans lequel, une fois la dent du maillage correspondante identifiée, les moyens automatisés (6) identifient à des parties de la dent du maillage correspondante, au sein du maillage (41), une ou des valeurs de teintes associées à des parties de la dent de référence (2), les parties de la dent de référence et les parties de la dent du maillage correspondante étant correspondantes entre elles.

14. Programme d'ordinateur, comprenant des instructions de code aptes à commander la mise en œuvre des étapes d'un procédé (100, 200) selon au moins l'une des revendications précédentes lorsqu'il est exécuté sur un ordinateur.

15. Support lisible par ordinateur, sur lequel est enregistré le programme d'ordinateur selon la revendication précédente.

## Patentansprüche

1. Verfahren (100) für die Segmentierung eines digitalen Zahnmodells (4), umfassend ein dreidimensionales Dreiecksnetz (41), **dadurch gekennzeichnet, dass** automatisierte Mittel (6) die folgenden Schritte, so genannte Anfangsschritte, durchführen:
- Einstufen (12), innerhalb des Netzes (41), jedes Dreiecks als innerhalb der Kategorie konkav (81), konvex (82) oder außerhalb der Kategorie konvex oder konkav liegend und
- Identifizieren, innerhalb des Netzes (41), wenigstens eines Zahnbereiches, der Dreiecke dergestalt enthält, dass jedes Dreieck des Bereichs wenigstens ein Nachbar-Dreieck in dem Bereich aufweist, wobei sämtliche Dreiecke des Bereichs außerhalb der Kategorie konvex oder konkav liegen.

2. Verfahren (100) nach dem vorhergehenden Anspruch, wobei, um den Schritt des Einstufens (12) eines Dreiecks (71) als innerhalb der Kategorie konkav, konvex oder außerhalb der Kategorie konvex oder konkav liegend zu realisieren, die automatisierten Mittel (6) die folgenden Teilschritte durchführen:
- Ermitteln von Winkelwerten (123) zwischen dem Dreieck (71) und jedem Nachbar-Dreieck (73) jedes Dreiecks (72), das zu dem Dreieck (71) benachbart ist, und
- in Abhängigkeit von den ermittelten Winkelwerten, Einstufen (124) des Dreiecks als innerhalb der Kategorie konkav, konvex oder außerhalb der Kategorie konvex oder konkav liegend.

3. Verfahren (100) nach dem vorhergehenden Anspruch, wobei die automatisierten Mittel (6) die Winkelwerte mit Hilfe von der Normalen des Dreiecks und von den Normalen jedes Nachbar-Dreiecks (73) jedes Dreiecks (72), das zu dem Dreieck (71) benachbart ist, ermitteln.

4. Verfahren (100) nach einem der Ansprüche 2 bis 3, wobei, für wenigstens ein Dreieck, das innerhalb der Kategorie konkav liegt, die automatisierten Mittel (6) die folgenden Schritte durchführen:
- Ermitteln (125) der Anzahl an zu dem Dreieck benachbarten Dreiecken, die innerhalb der Kategorie konkav liegen, und
- wenn die Anzahl kleiner ist als ein vorher festgelegter Wert, Entfernen des Dreiecks aus der Kategorie konkav.

5. Verfahren (100) nach einem der vorhergehenden Ansprüche, wobei, um den Schritt des Identifizierens (13) des Zahnbereichs zu realisieren, die automatisierten Mittel (6) die folgenden Teilschritte durchführen:
- Ermitteln (131), innerhalb des Netzes, eines Ausgangsdreiecks (91), das außerhalb der Kategorie konkav oder konvex liegt,
- Auswählen (132, 133) von zu dem Ausgangsdreieck (91) benachbarten Dreiecken, die außerhalb der Kategorie konvex oder konkav liegen und deren jeweilige Normalen Werte aufweisen, die in einem vorher festgelegten Intervall liegen, und
- unter Betrachtung jedes der ausgewählten Dreiecke als ein Ausgangsdreieck, Wiederholen des vorangegangenen Schrittes (132, 133) für jedes Ausgangsdreieck, bis keine auszuwählenden Dreiecke, die außerhalb der Kategorie liegen, mehr vorhanden sind, so dass der Zahnbereich identifiziert wird, der die ausgewählten Dreiecke enthält.

6. Verfahren (100) nach einem der vorhergehenden Ansprüche, wobei die automatisierten Mittel (6) die folgenden Schritte durchführen:
- für den oder für wenigstens einen der Zahnbereiche, Ermitteln einer Anzahl an Nachbar-Dreiecken, die sich in einem Zahnbereich befinden, der zu dem Zahnbereich benachbart ist,
- wenn die Anzahl an Nachbar-Dreiecken größer ist als ein vorher festgelegter Wert, Zusammenlegen (134) des Zahnbereichs mit dem Nachbar-Zahnbereich, so dass die zwei Bereiche nur einen Zahnbereich bilden.

7. Verfahren (100) nach einem der vorhergehenden Ansprüche, wobei die automatisierten Mittel (6) die folgenden Schritte durchführen:
- für den oder für wenigstens einen der Zahnbereiche, Ermitteln der Anzahl an Dreiecken des Bereichs und eines mittleren Krümmungswertes des Bereichs,
- wenn die Anzahl an Dreiecken größer ist als ein vorher festgelegter maximaler Wert, kleiner ist als ein vorher festgelegter minimaler Wert und/oder wenn der mittlere Krümmungswert kleiner ist als ein vorher festgelegter Schwellwert, Kennzeichnen (135) des Zahnbereichs, so dass die Dreiecke des Zahnbereichs nicht mehr als Teil eines Zahnbereichs identifiziert werden.

8. Verfahren (100) nach einem der vorhergehenden Ansprüche, wobei, nach den Anfangsschritten, die automatisierten Mittel (6) die folgenden Schritte durchführen:
- für den oder für wenigstens einen der Zahnbereiche, Ermitteln (141) eines Basisdreiecks (C) des Zahnbereichs,
- ausgehend von dem Basisdreieck (C), Ermitteln (14) der Konturen eines Zahns, der das Basisdreieck (C) enthält.

9. Verfahren (100, 200) nach dem vorhergehenden Anspruch, wobei, wenn das Basisdreieck (C) ein mittiges Dreieck ist, das sich in der Mitte des Zahnbereichs befindet, die automatisierten Mittel (6) die folgenden Schritte für dessen Ermittlung durchführen:
- Ermitteln der Koordinaten, innerhalb des Netzes (41), der Mitte des Zahnbereichs, mit Hilfe der Koordinaten der Mitte jedes Dreiecks des Zahnbereichs und
- Ermitteln des mittigen Dreiecks des Zahnbereichs, indem die Koordinaten jedes Dreiecks des Zahnbereichs mit den Koordinaten der Mitte des Bereichs, die ermittelt wurden, verglichen werden und indem als mittiges Dreieck das der Mitte des Zahnbereichs am nächsten gelegene identifiziert wird.

10. Verfahren (100, 200) nach Anspruch 8 oder 9, wobei, um das Ermitteln (14) der Konturen des Zahns zu realisieren, die automatisierten Mittel die folgenden Schritte durchführen:
- für jeden Zahnbereich, Identifizieren jedes Basisdreiecks (C) des Zahnbereiches als Teil einer Zahnoberfläche, der dem Zahnbereich entspricht,
- für jeden Zahnbereich, Ermitteln (142) von Winkelwerten zwischen jedem Dreieck des Bereichs und den Nachbarn des Dreiecks,
- Ermitteln (142) eines mittleren Winkelwertes für jedes Dreieck des Bereichs in Abhängigkeit von den ermittelten Winkelwerten,
- wenn der mittlere Winkelwert kleiner ist als ein vorher festgelegter Wert, Identifizieren des Dreiecks als Teil der Zahnoberfläche, der dem Zahnbereich entspricht,
- für jedes Dreieck, das zu dem Basisdreieck benachbart ist, wenn das Nachbar-Dreieck dem Zahnbereich des Basisdreiecks zugehörig ist, Identifizieren (143) des Nachbar-Dreiecks als Teil der Zahnoberfläche, der dem Zahnbereich entspricht,
- unter Betrachtung jedes ausgewählten Nachbar-Dreiecks als ein Basisdreieck, Wiederholen (143) des vorangegangenen Schrittes für jedes Basisdreieck, bis kein als Teil der Oberfläche zu identifizierendes Dreieck mehr vorhanden ist,
- für jede Zahnoberfläche, Ausdehnen (144) der Oberfläche, indem der Oberfläche Dreiecke hinzugefügt werden, die Nachbarn der Dreiecke der Oberfläche sind und die dem gleichen Zahnbereich zugehörig sind wie die Dreiecke der Oberfläche,
- für jede Zahnoberfläche, Erodieren (145) der Oberfläche, in dem von der Oberfläche Dreiecke entfernt werden, bei denen ein Nachbar, der dem gleichen Zahnbereich zugehörig ist, nicht als Teil der Oberfläche identifiziert wird,
- Ermitteln (146) der Konturen der Oberfläche des Zahns mit Hilfe der Berechnung einer oder mehrere Bezierkurven.

11. Verfahren (100, 200) nach einem der Ansprüche 8 bis 10, wobei, um eine Entsprechung zwischen einem Referenzzahn (2) einer zweidimensionalen Darstellung und einem Zahn des digitalen Zahnmodells (4), das das dreidimensionale Dreiecksnetz (41) enthält, zu ermitteln, die automatisierten Mittel (6) die folgenden Schritte durchführen:
- Segmentieren (100) des Dreiecksnetzes nach einem der Ansprüche 10 bis 13, so dass die Konturen wenigstens eines Zahns des Netzes identifiziert werden,
- Erhalten (201) einer zweidimensionalen Darstellung einer Oberfläche des Referenzzahns,
- Erhalten (201) einer zweidimensionalen Darstellung einer, durch die Konturen begrenzten, Oberfläche des Zahns des Netzes,
- Ermitteln (206) eines ersten Bezugswerts zwischen einer Höhe und einer Breite der Oberfläche des Referenzzahns und eines zweiten Bezugswerts zwischen einer Höhe und einer Breite der Oberfläche des Zahns des Netzes,
- wenn ein Differenzwert zwischen dem ersten Wert und dem zweiten Wert größer ist als ein vorher festgelegter Wert, Identifizieren des Zahns des Netzes als nicht dem Referenzzahn (2) entsprechend,
andernfalls:
- Transformieren (207), gemäß dem Levenberg-Marquardt-Algorithmus, der zweidimensionalen Darstellung des Referenzzahns (2), so dass die Oberflächen des Referenzzahns und des Zahns des Netzes durch Überlagerung verglichen werden,
- Ermitteln (208) eines Überlagerungswerts zwischen der Oberfläche des Referenzzahns (2) und des Oberfläche des Zahns des Netzes,
- wenn der Überlagerungswert in einem vorher festgelegten Intervall liegt, Identifizieren (210) des Zahns des Netzes als dem Referenzzahn entsprechend.

12. Verfahren (100, 200) nach dem vorhergehenden Anspruch, wobei, anstelle den übereinstimmenden Zahn direkt mit Hilfe von dem Überlagerungswert zu identifizieren, die automatisierten Mittel die folgenden Schritte durchführen:
- Aufteilen (202, 203) der Oberfläche des Referenzzahns, so dass mehrere Teile der Oberfläche unterschieden werden,
- Aufteilen (202, 203) der Oberfläche des entsprechenden Zahns des Netzes,
- Ermitteln (204) von Werten in Bezug auf jeden Teil der ermittelten Oberflächen,
- Ermitteln (205) eines Vergleichswertes zwischen den Werten, die für jeden Teil der Oberfläche des Referenzzahns ermittelt werden, und den jeweiligen Werten für jeden entsprechenden Teil der Oberfläche des Zahns des Netzes,
- Ermitteln (209) eines Identifikationswertes zwischen der Oberfläche des Referenzzahns und der Oberfläche des Zahns des Netzes in Abhängigkeit von dem Vergleichswert und von dem Überlagerungswert,
- wenn der Identifikationswert in einem vorher festgelegten Intervall liegt, -
Identifizieren (210) des Zahns des Netzes als dem Referenzzahn entsprechend.

13. Verfahren (100, 100) nach einem der Ansprüche 11 oder 12, wobei, sobald der entsprechende Zahn des Netzes identifiziert wurde, die automatisierten Mittel (6) mit Teilen des entsprechenden Zahns des Netzes, innerhalb des Netzes (41), einen oder mehr Farbtonwerte gleichsetzen, die Teilen des Referenzzahns (2) zugeordnet sind, wobei die Teile des Referenzzahns und die Teile des entsprechenden Zahns des Netzes einander entsprechen.

14. Computerprogramm, umfassend Code-Anweisungen, die eingerichtet sind, die Durchführung der Schritte eines Verfahrens (100, 200) gemäß wenigstens einem der vorhergehenden Ansprüche zu steuern, wenn es auf einem Computer ausgeführt wird.

15. Computerlesbares Medium, auf dem das Computerprogramm nach dem vorhergehenden Anspruch gespeichert ist.

## Claims

1. Method (100) for segmenting a digital model (4) of teeth comprising a three-dimensional triangular mesh (41), **characterised in that** automatic means (6) implement the following steps, which are referred to as initial steps:
- classifying (12), within the mesh (41), each triangle into a concave (81) or convex (82) category or neither convex nor concave category, and
- identifying (13), within the mesh (41), at least one tooth region comprising triangles such that each triangle of the region has at least one neighbouring triangle in the region, all the triangles of the region belonging to neither the convex nor the concave category.

2. Method (100) according to the preceding claim, wherein, to perform the step of classifying (12) a triangle into the concave or convex category or neither convex nor concave category, the automatic means (6) implement the following sub-steps:
- determining angle values (123) between the triangle (71) and each neighbouring triangle (73) of each triangle (72) neighbour to the triangle (71), and
- according to the angle values determined, classifying (124), the triangle into a concave or convex category or neither convex nor concave category.

3. Method (100) according to the preceding claim, wherein the automatic means (6) determine the angle values using the normal of the triangle and the normals of each neighbouring triangle (73) of each triangle (72) neighbour to the triangle (71).

4. Method (100) according to claim 2 or 3, wherein, for at least one triangle in the concave category, the automatic means (6) implement the following steps:
- determining (125) the number of triangles neighbours to the triangle which are in the concave category, and
- if the number is less than a predetermined value, removing the triangle from the concave category.

5. Method (100) according to any one of the preceding claims,
wherein, to perform the step (13) of identifying the tooth region, the automatic means (6) implement the following sub-steps:
- determining (131), within the mesh, a seed triangle (91) belonging to neither the concave category nor the convex category,
- selecting (132, 133) triangles neighbours to the seed triangle (91), belonging to neither the concave category nor the convex category and whose respective normals have values that lie within a predetermined interval, and
- considering each of the triangles selected as a seed triangle, repeating the preceding step (132, 133) for each seed triangle, until there are no more uncategorised triangles to be selected, so as to identify the tooth region comprising the selected triangles.

6. Method (100) according to any one of the preceding claims, wherein the automatic means (6) implement the following steps:
- for the tooth region or at least one of the tooth regions, determining a number of neighbouring triangles located in a tooth region neighbour to the tooth region,
- if the number of neighbouring triangles is greater than a predetermined value, merging (134) the tooth region with the neighbouring tooth region so that the two regions form a single tooth region.

7. Method (100) according to any one of the preceding claims, wherein the automatic means (6) implement the following steps:
- for the tooth region or at least one of the tooth regions, determining the number of triangles of the region and an average curvature value of the region,
- if the number of triangles is greater than a predetermined maximum value, less than a predetermined minimum value, and/or if the average curvature value is less than a predetermined threshold, marking (135) the tooth region so as to no longer identify the triangles of the tooth region as being part of a tooth region.

8. Method (100, 200) according to any one of the preceding claims, wherein, after the initial steps, the automatic means (6) implement the following steps:
- for the tooth region or at least one of the tooth regions, determining (141) a base triangle (C) of the tooth region,
- from the base triangle (C), determining (14) contours of a tooth comprising the base triangle (C).

9. Method (100, 200) according to the preceding claim, wherein, since the base triangle (C) is a central triangle located at the centre of the tooth region, the automatic means (6) implement the following steps for its determination:
- determining the coordinates, within the mesh (41), of the centre of the tooth region, using the coordinates of the centre of each triangle of the tooth region, and
- determining the central triangle of the tooth region by comparing the coordinates of each triangle of the tooth region with the coordinates of the centre of the region that have been determined and by identifying as central triangle the triangle closest to the centre of the tooth region.

10. Method (100, 200) according to claim 8 or 9, wherein, to determine (14) the tooth contours, the automatic means implement the following steps:
- for each tooth region, identifying each base triangle (C) of the tooth region as being part of a tooth surface corresponding to the tooth region,
- for each tooth region, determining (142) angle values between each triangle of the region and the neighbours of the triangle,
- determining (142) an average angle value for each triangle of the region according to the angle values determined,
- if the average angle value is less than a predetermined value, identifying the triangle as being part of the tooth surface corresponding to the tooth region,
- for each triangle neighbour to the base triangle, if the neighbouring triangle belongs to the tooth region of the base triangle, identifying (143) the neighbouring triangle as being part of the tooth surface corresponding to the tooth region,
- considering each neighbouring triangle selected as a base triangle, repeating (143) the preceding step for each base triangle, until there are no more triangles of the region to be identified as being part of the surface,
- for each tooth surface, expanding (144) the surface by adding to the surface triangles which are neighbours of the triangles of the surface and which belong to the same tooth region as the triangles of the surface,
- for each tooth surface, eroding (145) the surface by removing from the surface triangles which have a neighbour belonging to the same tooth region but not identified as being part of the surface,
- determining (146) the contours of the tooth surface by calculating one or more Bézier curves.

11. Method (100, 200) according to any one of claims 8 to 10, wherein, to determine a correspondence between a reference tooth (2) of a two-dimensional representation and a tooth of the tooth digital model (4) comprising the three-dimensional triangular mesh (41), the automatic means (6) implement the following steps:
- segmenting (100) the triangular mesh according to any one of claims 10 to 13 so as to identify contours of at least one tooth of the mesh,
- obtaining (201) a two-dimensional representation of a surface of the reference tooth,
- obtaining (201) a two-dimensional representation of a surface, delimited by the contours, of the tooth of the mesh,
- determining (206) a first ratio between a height and a width of the surface of the reference tooth and a second ratio between a height and a width of the surface of the tooth of the mesh,
- if the difference between the first ratio and the second ratio is greater than a predetermined value, identifying the tooth of the mesh as not corresponding to the reference tooth (2),
otherwise:
- transforming (207), according to the Levenberg-Marquardt algorithm, the two-dimensional representation of the reference tooth (2), so as to compare by overlap the surface of the reference tooth and that of the tooth of the mesh,
- determining (208) an overlap value between the surface of the reference tooth (2) and that of the tooth of the mesh,
- if the overlap value lies within a predetermined interval, identifying (210) the tooth of the mesh as corresponding to the reference tooth.

12. Method (100, 200) according to the preceding claim, wherein, instead of identifying the corresponding tooth directly using the overlap value, the automatic means implement the following steps:
- cutting (202, 203) the surface of the reference tooth so as to identify several parts of the surface,
- cutting (202, 203) the surface of the tooth of the mesh in a corresponding manner,
- determining (204) values in relation with each part of the surfaces determined,
- determining (205) a comparison value between the values determined for each part of the surface of the reference tooth and the respective values for each corresponding part of the surface of the tooth of the mesh,
- determining (209) an identification value between the surface of the reference tooth and the surface of the tooth of the mesh depending on the comparison value and the overlap value,
- if the identification value lies within a predetermined interval, identifying (210) the tooth of the mesh as corresponding to the reference tooth.

13. Method (100, 200) according to claim 11 or 12, wherein, once the corresponding tooth of the mesh has been identified, the automatic means (6) identify at some parts of the corresponding tooth of the mesh, within the mesh (41), one or more shade values associated with parts of the reference tooth (2), the parts of the reference tooth and the parts of the corresponding tooth of the mesh corresponding to each other.

14. Computer program comprising code instructions that can control execution of the steps of a method (100, 200) according to at least one of the preceding claims when it is executed on a computer.

15. Computer-readable medium, on which the computer program according to the preceding claim is stored.
